# EUROPÄISCHE PATENTSCHRIFT

(11) **EP 3 289 509 B1**
(45) Veröffentlichungstag und Bekanntmachung des Hinweises auf die Patenterteilung: **23.09.2020**
(21) Anmeldenummer: 16718362.3
(22) Anmeldetag: 25.04.2016
(51) Int. Cl.: G06F 21/43, G06F 21/64

(54) **VERFAHREN ZUR ERZEUGUNG EINER ELEKTRONISCHEN SIGNATUR**
METHOD FOR GENERATING AN ELECTRONIC SIGNATURE
PROCÉDÉ POUR PRODUIRE UNE SIGNATURE ÉLECTRONIQUE

(30) Priorität: 30.04.2015 DE 102015208098
(43) Veröffentlichungstag der Anmeldung: 07.03.2018
(73) Patentinhaber: Bundesdruckerei GmbH, 10969 Berlin (DE)
(72) Erfinder: SEEGEBARTH, Christian, 20249 Hamburg (DE)
(74) Vertreter: Richardt Patentanwälte PartG mbB
(86) Internationale Anmeldenummer: PCT/EP2016/059201
(87) Internationale Veröffentlichungsnummer: WO 2016/173994

(56) Entgegenhaltungen:
- EP-A2- 1 455 503
- WO-A2-2011/005869
- DE-A1-102010 028 133
- Calypso10: "Transaktionsnummer - Wikipedia", , 18. April 2015 (2015-04-18), XP055282254, Gefunden im Internet: URL:https://de.wikipedia.org/w/index.php?t itle=Transaktionsnummer&oldid=140970550 [gefunden am 2016-06-21]
- "Advanced Security Mechanisms for Machine Readable Travel Documents and eIDAS Token -", , 3. Februar 2015 (2015-02-03), XP055239778, Gefunden im Internet: URL:https://www.bsi.bund.de/SharedDocs/Dow nloads/EN/BSI/Publications/TechGuidelines/ TR03110/BSI_TR-03110_Part-2-V2_2.pdf?__blo b=publicationFile&v=1 [gefunden am 2016-01-08]

## Beschreibung

Die Erfindung betrifft ein Verfahren zur Erzeugung eines elektronischen Signatur eines Nutzers mithilfe eines Telekommunikationsendgeräts, das heißt eine sogenannte mobile Signatur, sowie ein entsprechendes Telekommunikationsendgerät, ein Signatur-Server-Computersystem und ein Telekommunikationssystem.

Aus DE 197 476 03 A1 ist ein Signaturverfahren bekannt, bei dem die zu signierende Nachricht von einem PC an einen Nachrichten-Server übertragen wird. Die zu signierende Nachricht wird von dem Nachrichten-Server an ein dem PC zugeordnetes Mobilfunktelefon übertragen und anschließend in dem Mobilfunktelefon signiert. Die resultierende Signatur wird von dem Mobilfunktelefon an den Nachrichten-Server zurückübertragen.

Aus der US 2007/0266234 A1 ist ein weiteres Verfahren zur Erzeugung einer elektronischen Signatur für ein elektronisches Dokument gezeigt, bei dem ein Nutzer über eine gesicherte Verbindung ein Dokument aus einer von einem Dokumentenmanagementserver bereitgestellten Dokumentenliste auswählt und Dokumentendaten zu diesen Dokumenten eingibt. Die Dokumentendaten werden unter einer Dokumenten-ID auf dem Dokumentenmanagementserver gespeichert. Anschließend wird die Dokumenten-ID über den Nutzer an einen Signaturserver weitergeleitet, der auf die Dokumentendaten zugreift, eine Signatur für diese Daten erstellt und die Signatur unter der Dokumenten-ID speichert.

Die WO 2011/005869 A2 beschreibt ein computerlesbares Medium mit darin verkörpertem computerlesbarem Programmcode zum Veranlassen eines Prozessors, ein Verfahren auszuführen, wobei das Verfahren das Empfangen einer Anforderung von einem Nutzer zum Signieren eines Dokuments durch einen Dienstanbieter, das Erhalten eines Transaktionsidentifikators (ID), das Erhalten von biometrischen Daten des Nutzers, Anwenden einer Hash-Funktion auf das Dokument, um einen Hash-Wert zu erhalten, Erhalten einer dem Nutzer zugeordneten TokenTyp-ID, Erzeugen eines Tokens unter Verwendung der TokenTyp-ID, der biometrischen Daten, der Transaktions-ID und des Hashwerts, wobei der Token eine maschinenlesbare Darstellung von Daten umfasst, und Einbetten des Tokens in das Dokument.

Die EP 1 455 503 A2 beschreibt eine Vorrichtung und ein Verfahren zum Signieren von elektronischen Daten mit einer digitalen Signatur, wobei ein zentraler Server einen Signaturserver und einen Authentifizierungsserver umfasst. Der Signaturserver speichert die privaten kryptografischen Schlüssel einer Mehrzahl von Nutzern sicher. Der Nutzer kontaktiert den zentralen Server unter Verwendung einer Workstation über einen sicheren Kanal, der für diesen Zweck eingerichtet ist. Der Nutzer liefert ein Passwort oder ein anderes Token basierend auf Informationen, die zuvor vom Authentifizierungsserver über einen separaten Authentifizierungskanal an den Nutzer geliefert wurden. Der Authentifizierungsserver stellt dem Signaturserver eine abgeleitete Version derselben Information durch einen permanenten sicheren Kanal zwischen den Servern bereit, die mit derjenigen verglichen wird, die vom Nutzer bereitgestellt wird. Falls sie übereinstimmen, werden vom Nutzer empfangene Daten mit dem privaten Schlüssel des Nutzers signiert.

Der vorliegenden Erfindung liegt demgegenüber die Aufgabe zugrunde, ein verbessertes Verfahren zur Erzeugung einer elektronischen Signatur mithilfe eines Telekommunikationsendgerätes zu schaffen sowie ein entsprechendes Telekommunikationsendgerät, ein Signatur-Server-Computersystem sowie ein Telekommunikationssystem.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da ein zu signierendes Dokument auf einfache Weise in einem persönlichen Speicherbereich des Nutzers gespeichert werden kann, so dass dieses nachfolgend signiert werden kann. Der Nutzer muss lediglich den Identifikator des Dokumentes erfassen und diesen mit einer Kennung und/oder einer Gerätekennung, die den Nutzer und oder das Telekommunikationsendgerät des Nutzers identifiziert, an das Signatur-Computer-System senden. Das Signatur-Computer-System kann sich anschließend das Dokument von einem Speicherort herunterladen und im persönlichen Speicherbereich des Nutzers speichern. Es ist nicht erforderlich, dass der Nutzer das Dokument auf sein mobiles Telekommunikationsendgerät herunterlädt, auf diesem zwischenspeichert und anschließend vom Telekommunikationsendgerät an das Signatur-Computer-System überträgt.

Unter einem "persönlichen Speicherbereich" bzw. einem Nutzerspeicherbereich wird ein Speicherbereich verstanden, auf den ausschließlich der Nutzer zugreifen kann. Der Nutzer muss sich hierzu gegenüber dem Signatur-Computer-System identifizieren, beispielsweise mittels einer Nutzerkennung und einem Passwort" oder auf eine andere übliche Methode.
Unter einer "elektronischen Signatur" wird hier eine einfache elektronische Signatur, eine fortgeschrittene elektronische Signatur oder eine qualifizierte elektronische Signatur verstanden, wobei letztere auf einem zum Zeitpunkt ihrer Erzeugung gültigen qualifizierten Zertifikat beruht und mit einer sicheren Signaturerstellungseinheit erstellt werden muss, um höchsten Anforderungen an die Sicherheit zu genügen.

Unter einem "Hochsicherheitsmodul" (HSM), welches auch als Hardware-Sicherheitsmodul oder Hardware Security Modul bezeichnet wird, wird hier ein Peripheriegerät, insbesondere ein (internes oder externes) Peripheriegerät, für die Speicherung eines kryptografischen Schlüssel und die Ausführung kryptografischer Operationen verstanden. Ein HSM ermöglicht es, die Vertrauenswürdigkeit und die Integrität von Daten und den damit verbundenen Informationen insbesondere in IT-Systemen sicherzustellen. Um die Vertrauenswürdigkeit zu gewährleisten, sollen die zum Einsatz kommenden kryptografischen Schlüssel sowohl softwaretechnisch als auch gegen physikalische Angriffe oder Seitenkanalangriffe geschützt werden.

Ein HSM sorgt für die Unzugänglichkeit des oder der darin gespeicherten privaten Schlüssel. Der Schutz des privaten Schlüssels kann so weit gehen, dass das HSM bei dem Versuch den privaten Schlüssel auszulesen, sich selbst zerstört oder zumindest derart zurücksetzt, dass der private Schlüssel unwiederbringlich gelöscht wird.

Unter einem "elektronischen Dokument" wird hier insbesondere eine Datei verstanden, die auf einer Anzeigevorrichtung, das heißt einem sogenannten Display, angezeigt oder auf einem Drucker ausgedruckt werden kann. Bei der Datei kann es sich zum Beispiel um eine Textdatei, ein Word-, Excel-, PDF-Dokument oder ein anderes elektronisches Dokument handeln, welches zum Beispiel ein Formular mit Eingabefeldern beinhaltet. Üblicherweise ist für das Öffnen eines solchen Dokuments, zum Beispiel zur Anzeige, zum Ausfüllen oder zum Ausdrucken des Dokuments, ein Programm erforderlich, um das sogenannte Rendering der Datei durchzuführen. Dabei kann es sich um die Vollversion des betreffenden Programms oder einen sogenannten Viewer handeln.
Unter einem "Telekommunikationsendgerät" wird hier ein tragbares, batteriegetriebenes Gerät mit einer Mobilfunk-Schnittstelle verstanden, insbesondere ein Mobiltelefon, ein Smartphone oder ein portabler Computer, wie zum Beispiel ein Laptop, Notebook oder Tablet-PC mit einer Mobilfunk-Schnittstelle. Das Telekommunikationsendgerät kann neben der Mobilfunk-Schnittstelle ein oder mehrere weitere Kommunikations-Schnittstellen für die drahtlose Kommunikation aufweisen, wie zum Beispiel eine Bluetooth- und/oder eine WLAN-Schnittstelle.

Unter einem "Telekommunikationsnetzwerk" wird hier insbesondere ein digitales zellulares Telekommunikations-Netzwerk verstanden, welches nach einem Mobilfunkstandard, wie z.B. einem GSM-, UMTS-, CDMA- oder einem LTE-Standard arbeitet. Über ein solches Mobilfunknetz kann eine Verbindung mit dem Internet hergestellt werden.

Unter einer "Internet-Session" wird hier eine temporäre Kommunikationsverbindung über das Internet verstanden, das heißt eine sogenannte Communication Session. Gemäß dem OSI-Schichtmodell kann sich eine Internet-Session auf die Transportschicht ("Transport Layer") oder die Anwendungsschicht ("Application Layer") beziehen. Insbesondere kann es sich bei einer Internet-Session um eine http-Session oder um eine https-Session handeln, wobei bei letzterer der Transportlayer durch eine symmetrische Verschlüsselung geschützt ist.

Unter einem "Signatur-Server-Computersystem" wird hier ein Computersystem verstanden, welches über eine Kommunikations-Schnittstelle zum Aufbau einer Internet-Session verfügt, und welches mit einem Hochsicherheitsmodul verbunden ist.

Unter einem "Seitenkanal" wird hier ein Kommunikationskanal verstanden, über den separat von der Internetsession eine Kommunikation erfolgt. Dies kann ein in die Internetsession eingebetteter, separat gesicherter Kanal sein. Es ist aber auch möglich, dass der Seitenkanal ein Nachrichtenkanal für den Signalisierungskanal der Kommunikation in einem Mobilfunknetz ist, über den beispielsweise Signalisierungsinformationen zur Steuerung der Gesprächsverbindungen, Rooming-Informationen, Vergebührungsinformationen, Informationen zur Feststellung des Gerätetyps, Short Messages (SMS)-Nachrichten und/oder Sprachnachrichten übertragen werden.

Unter einem "ID-Token" wird hier insbesondere ein tragbares elektronisches Gerät verstanden, das einen Nutzer zugeordnet ist, und welches zumindest einen Datenspeicher zur Speicherung zumindest eines Attributwerts und eine Kommunikations-Schnittstelle zum Auslesen des Attributs aufweist. Vorzugsweise hat der ID-Token einen gesicherten Speicherbereich zur Speicherung des zumindest einen Attributwerts, um zu verhindern, dass der in dem Speicherbereich gespeicherte Attributwert in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Beispielsweise kann das Dokument den Identifikator beinhalten und der Identifikator wird vom Telekommunikationsendgerät mit einer Schnittstelle des Telekommunikationsendgerätes unmittelbar vom Dokument erfasst. Der Identifikator ist also ein Bestandteil des Dokumentes, so dass der Identifikator mit einer entsprechend ausgebildeten Schnittstelle des Telekommunikationsendgeräts direkt aus dem Dokument erfasst werden kann.

Der Identifikator kann in einem elektronischen Dokument zum Beispiel in der Form eines optisch erfassbaren Codes, wie zum Beispiel eines Barcodes oder eines QR-Codes, beinhaltet sein. Das elektronische Dokument kann dem Nutzer in Form einer Anzeige, zum Beispiel auf dem Display seines PCs, oder als Ausdruck vorliegen.

Der Nutzer kann den Identifikator des Dokuments z.B. mithilfe der Kamera seines Telekommunikationsendgerätes erfassen, beispielsweise durch Abfotografieren des QR-Codes, der den Identifikator beinhaltet und Decodierung des QR-Codes durch eine entsprechende App des Telekommunikationsendgerätes,

Nach einer Ausführungsform der Erfindung beinhaltet der Identifikator eine Adresse, wie zum Beispiel eine eindeutige URL, von der das elektronische Dokument abrufbar ist. Die Adresse kann aber auch ein Speicherort auf dem Signatur-Computer-System sein, von dem aus das Dokument im persönlichen Speicherbereich des Nutzers gespeichert werden kann

Um den Nutzer gegenüber dem Signatur-Computer-System zu identifizieren, enthält die Nachricht vorzugsweise eine Absenderadresse des Telekommunikationsendgerätes des Nutzers. Die Nachricht kann zum Beispiel in der Form einer SMS-Nachricht gesendet werden, wobei die Absenderadresse die Telefonnummer des Telekommunikationsendgerätes sein kann. Dies hat den weiteren Vorteil, dass der Nutzer durch diese Nachricht eindeutig gegenüber dem Signatur-Server-Computersystem identifiziert und authentifiziert ist, da die Versendung der SMS-Nachricht den Besitz des Telekommunikationsendgerätes voraussetzt.

Die Erzeugung der Signatur des Dokumentes erfolgt beispielsweise mit folgenden Schritten:
- Empfang eines Codes von dem Signatur-Server-Computersystem über einen Signalisierungskanal des Mobilfunknetzes durch das Mobilfunkgerät,
- Übertragung einer Kombination des Codes und einer Authentifizierungsinformation des Nutzers über die gesicherte Internet-Session an das Signatur-Server-Computersystem,
- Überprüfung der Validität der Kombination des Codes und der Authentifizierungsinformation durch das Signatur-Server-Computersystem,
- Erzeugung der elektronischen Signatur des Nutzers durch ein Hochsicherheitsmodul des Signatur-Server-Computersystems, wobei in dem Hochsicherheitsmodul der private Schlüssel des Nutzers für die Erzeugung der elektronischen Signatur gespeichert ist.

Dieses Verfahren ist besonders vorteilhaft, da einerseits der Implementierungsaufwand besonders gering ist, weil die elektronische Signatur nicht von dem Telekommunikationsendgerät selbst generiert wird, sondern deren Erzeugung mithilfe des Telekommunikationsendgerätes lediglich initiiert wird, ohne dass dies besondere Hardwarevoraussetzungen oder ein Schlüsselmanagement von kryptografischen Schlüsseln seitens des Telekommunikationsendgerätes voraussetzt, und andererseits das Verfahren besonders sicher ist, und insbesondere gesetzeskonform ausgebildet sein kann.

Die Erzeugung einer elektronischen Signatur setzt nämlich nach Ausführungsformen der Erfindung eine 2-Faktor-Authentifizierung des Nutzers voraus, nämlich den Nachweis des "Besitzes", nämlich den Besitz des Telekommunikationsendgerätes, und des "Wissens", nämlich des Wissens der Authentifizierungsinformation.

Der Nachweis des Besitzes des Telekommunikationsendgerätes erfolgt, indem ein Code von dem Signatur-Server-Computersystem über einen Seitenkanal an das Telekommunikationsendgerät übertragen wird. Diesen Code kann der Nutzer nur empfangen, wenn er sich im Besitz des Telekommunikationsendgeräts befindet. Somit kann auch die anschließende Übertragung der Kombination des Codes und der Authentifizierungsinformation des Nutzers über die gesicherte Internet-Session nur dann erfolgen, wenn sich der Nutzer sowohl in Besitz des Telekommunikationsendgerätes befindet und seine Authentifizierungsinformation kennt, wodurch eine 2-Faktor-Authentifizierung gegeben ist.

Nach einer Ausführungsform der Erfindung wird zunächst die gesicherte Internet-Session, beispielsweise eine https-Session, zwischen dem Telekommunikationsendgerät des Nutzers und dem Signatur-Server-Computersystem aufgebaut. Der Nutzer gibt dann in sein Telekommunikationsendgerät eine Signaturanforderung zum Signieren des elektronischen Dokuments ein, welche von dem Telekommunikationsendgerät über die gesicherte Internet-Session zum Beispiel als http-Request übertragen wird.

Das Signatur-Server-Computersystem generiert dann aufgrund des Empfangs der Signaturanforderung einen Code, beispielsweise durch Erzeugung eines Zufallswerts oder eines Pseudo-Zufallswerts. Beispielsweise kann das Signatur-Server-Computersystem hierfür eine hardwareimplementierte Binary Symmetric Source (BSS) aufweisen, die Zufallswerte maximaler Entropie liefert. Alternativ kann das Signatur-Server-Computersystem einen softwareimplementierten Zufallsgenerator aufweisen, der Pseudo-Zufallswerte liefert.

Nach einer Ausführungsform der Erfindung erfolgt die Sicherung der Internet-Session auf der Anwendungsschicht ("Application Layer") oder der Transportschicht ("Transport Layer") mittels symmetrischer oder asymmetrischer Verschlüsselung.

Nach einer Ausführungsform der Erfindung wird der Code nicht über die gesicherte Internet-Session von dem Signatur-Server-Computersystem an das Telekommunikationsendgerät übertragen, sondern über einen davon separaten Kanal, nämlich über einen Seitenkanal des Mobilfunknetzes z.B. in Form einer SMS-Nachricht. Dadurch wird sichergestellt, dass dasjenige Telekommunikationsendgerät, von dem aus die Internet-Session zu dem Signatur-Server-Computersystem aufgebaut worden ist und von dem aus die Signaturanforderung empfangen worden ist, dasselbe Telekommunikationsendgerät ist, zu dem das Signatur-Server-Computersystem den Code sendet. Denn der Empfang des Codes ist nur möglich, wenn sich der Nutzer tatsächlich im Besitz des Telekommunikationsendgerätes befindet.

Nach einer Ausführungsform der Erfindung muss sich der Nutzer zunächst gegenüber seinem Telekommunikationsendgerät authentifizieren, bevor die gesicherte Internet-Session aufgebaut werden kann. Dies erfolgt beispielsweise durch die Eingabe einer Personal Identification Number, das heißt der sogenannten PIN, die der Nutzer über die Tastatur seines Telekommunikationsendgerätes eingibt. Das Telekommunikationsendgerät vergleicht die eingegebene PIN mit einem Referenzwert der PIN, der zum Beispiel auf der SIM-Karte, die sich in dem Kartenleser des Telekommunikationsendgerätes befindet, gespeichert ist. Bei Übereinstimmung der eingegebenen PIN mit der auf der SIM-Karte gespeicherten Referenz-PIN gilt der Nutzer authentifiziert und das Telekommunikationsendgerät wird entsperrt, sodass der Nutzer dessen Funktionen nutzen kann. Hierdurch wird sichergestellt, dass für die 2-Faktor-Authentifizierung nicht nur der Besitz des Telekommunikationsendgerätes nachgewiesen wird, sondern der Besitz des autorisierten Nutzers, dem das Telekommunikationsendgerät zugeordnet ist, und der alleine Kenntnis von der PIN zum Entsperren seines Telekommunikationsendgerätes hat.

Zur weiteren Erhöhung der Sicherheit kann vorgesehen sein, dass sich der Nutzer zunächst in das Signatur-Server-Computersystem einloggen muss, und zwar über die gesicherte Internet-Session, bevor die Erzeugung der elektronischen Signatur für den Nutzer erfolgen kann. Das Einloggen kann zum Beispiel durch Eingabe einer Username/Passwort-Kombination des Nutzers erfolgen.

Nach einer Ausführungsform der Erfindung wird das zu signierende elektronische Dokument in einem nur für den eingeloggten Nutzer zugänglichen Speicherbereich des Signatur-Server-Computersystems gespeichert, das heißt einem sogenannten virtuellen Document Safe des Nutzers. Zur Signierung eines in dem Document Safe des Nutzers hinterlegten Dokuments wählt der Nutzer dieses Dokument zum Beispiel durch Anklicken aus, sodass das ausgewählte elektronische Dokument zunächst über die gesicherte Internet-Session an das Telekommunikationsendgerät übertragen und dort angezeigt wird. Der Nutzer kann dann das elektronische Dokument zur Kenntnis nehmen und erforderlichenfalls ergänzen, zum Beispiel durch Eingabe von Attributwerten des Nutzers, wie zum Beispiel dessen Name, Adresse und Geburtsdatum, je nachdem welche Eingabefelder das elektronische Dokument hat. Wenn der Nutzer die Signatur dieses elektronischen Dokuments freigeben möchte, gibt er dann die Signaturanforderung in das Telekommunikationsendgerät ein, die über die gesicherte Internet-Session an das Signatur-Server-Computersystem übertragen wird, sodass dieses dann mithilfe des HSM und des in dem HSM gespeicherten privaten Schlüssel des Nutzers die elektronische Signatur für das Dokument erzeugt.

Nach einer Ausführungsform der Erfindung hat das zu signierende elektronische Dokument Eingabefelder, in die Attributwerte des Nutzers einzutragen sind, wie zum Beispiel dessen Vorname, Name, Adresse und Geburtsdatum. Dies kann anlässlich der Speicherung des elektronischen Dokuments in dem Document Safe des Nutzers erfolgen oder nachdem der Nutzer das elektronische Dokument in seinem Document Safe, zum Beispiel durch Anklicken, ausgewählt hat.

Nach einer Ausführungsform der Erfindung sind die Eingabefelder des elektronischen Dokuments und die Attribute einander semantisch zugeordnet. Dies kann so erfolgen, dass die Eingabefelder dieselben Bezeichnungen wie die Attribute aufweisen, das heißt das Eingabefeld zur Eingabe des Vornamens des Nutzers trägt die Bezeichnung "Vorname", das heißt dieselbe Bezeichnung wie das Attribut "Vorname". Aufgrund dieser semantischen Zuordnung zwischen Eingabefeld und Attribut kann das Signatur-Server-Computersystem den Attributwert des Attributs Vorname in das Eingabefeld mit der gleichen Bezeichnung automatisch eintragen.

Nach einer Ausführungsform der Erfindung erfolgt die initiale Registrierung des Nutzers mithilfe eines ID-Tokens des Nutzers, beispielsweise mithilfe eines elektronischen Ausweisdokuments des Nutzers, wie zum Beispiel dessen elektronischem Personalausweis. Der ID-Token des Nutzers hat einen geschützten Speicherbereich, in dem Attributwerte von Attributen des Nutzers gespeichert sind, wie zum Beispiel dessen Vorname, Name, Adresse, Geburtsdatum. Diese Attributwerte des Nutzers sollen als Teil des Nutzerprofils durch das Signatur-Server-Computersystem gespeichert werden, wozu ein sicheres und vertrauenswürdiges Auslesen und Übertragung dieser Attributwerte an das Signatur-Server-Computersystem erforderlich ist.

Hierzu muss sich zunächst der Nutzer gegenüber dem ID-Token authentifizieren. Dies kann durch Eingabe von Authentifizierungsdaten des Nutzers in das Telekommunikationsendgerät über eine lokale Verbindung, die zwischen dem Telekommunikationsendgerät und dem ID-Token aufgebaut wird, erfolgen, wie zum Beispiel über eine RFID- oder NFC-Verbindung, oder durch Erfassung der Authentifizierungsdaten des Nutzers unmittelbar durch denID-Token, der z.B. hierzu einen biometrischen Sensor für eine biometrische Authentifizierung aufweisen kann.

Ferner authentifiziert sich das Signatur-Server-Computersystem über das Internet gegenüber dem ID-Token, beispielsweise mithilfe eines Zertifikats und/oder eines Berechtigungszertifikats. Nachdem sich sowohl der Nutzer als auch das Signatur-Server-Computersystem erfolgreich gegenüber dem ID-Token authentifiziert haben, erfolgt der Aufbau einer Verbindung mit Ende-zu-Ende-Verschlüsselung zwischen dem Signatur-Server-Computersystem und dem ID-Token, welche über das Internet und das Telekommunikationsendgerät, das heißt die zwischen dem Telekommunikationsendgerät und dem ID-Token aufgebaute lokale Verbindung, verläuft. Über diese Verbindung mit Ende-zu-Ende-Verschlüsselung werden dann die Attributwerte des Nutzers von dem ID-Token an das Signatur-Server-Computersystem übertragen und dort zum Anlegen des Nutzerprofils des Nutzers gespeichert.

Für das Auslesen der Attributwerte von Attributen des Nutzers aus dem ID-Token nimmt das Signatur-Server-Computersystem also die Rolle eines ID-Provider-Computersystems ein, wie es an sich aus dem Stand der Technik bekannt ist. Beispielsweise ist aus DE 10 2008 000 067 B4 ein Verfahren zum Lesen von Attributen aus einem ID-Token bekannt, bei dem ein ID-Provider-Computersystem über ein Netzwerk zumindest einen Attributwert aus dem ID-Token ausliest, wobei es sich bei dem ID-Token zum Beispiel um ein Ausweisdokument handeln kann. Aus DE 10 2008 040 416 A1, DE 10 2009 001 959 A1, DE 10 2009 027 676, DE 10 2009 027 681 A1, DE 10 2009 027 682 A1, DE 10 2009 027 686 A1, DE 10 2009 027 723 A1, DE 10 2009 046 205 A1 und DE 10 2010 028 133 A1 sind Weiterbildungen dieses Verfahrens bekannt.

Die Authentifizierung des Nutzers gegenüber dem ID-token kann beispielsweise folgende Schritte umfassen:
- Erfassen eines biometrischen Merkmales des Nutzers durch eine Schnittstelle,
- Vergleich des erfassten biometrischen Merkmals mit einem auf dem ID-Token gespeicherten biometrischen Merkmals durch den ID-Token, und
- Authentifizieren des Nutzers, wenn das erfasste biometrische Merkmal mit dem gespeicherten biometrischen Merkmal übereinstimmt.

Alternativ kann das initiale Registrierung des Nutzers mithilfe eines sogenannten Video-Ident-Verfahrens erfolgen.

Bei diesem Verfahren werden durch das Telekommunikationsendgerät in einem ersten Schritt gespeicherte biometrische Merkmale des Nutzers aus einem ID-Token erfasst und über eine Ende-zu-Ende-Verschlüsselung an das Signatur-Computer-System übertragen.

Anschließend werden die zu den gespeicherten biometrischen Merkmalen korrespondierenden biometrischen Merkmale des Nutzers durch das Telekommunikationsendgerät erfasst und über eine Ende-zu-Ende-Verschlüsselung an das Signatur-Computer-System übertragen.

Auf dem Signatur-Computer-System erfolgt ein Vergleich der gespeicherten biometrischen Merkmale mit den erfassten biometrischen Merkmalen des Nutzers. Stimmen die Merkmale überein, wird der Nutzer identifiziert.

Abschließend können weitere Attributswerte des Nutzers erfasst und in einem Nutzerprofil gespeichert werden.

Der ID-Token kann beispielsweise ein Ausweisdokument sein, auf dem ein Lichtbild des Nutzers abgebildet ist oder andere biometrische Merkmale wie Fingerabdrücke. Diese Merkmale können beispielsweise mit einer Kamera des Telekommunikationsendgerätes erfasst werden. Anschließend werden durch die Kamera die korrespondierenden biometrischen Merkmale des Nutzers aufgenommen, beispielsweise, indem dieser sein Gesicht vor die Kamera hält.

Der Abgleich der Merkmale kann, abhängig von der Art der Merkmale automatisiert erfolgen. Alternativ kann ein manueller Abgleich durch einen Mitarbeiter erfolgen.

Die Attributswerte können gemeinsam mit den biometrischen Merkmalen ausgelesen werden oder erst nach erfolgreicher Identifizierung übermittelt werden, beispielsweise von einem ID-Token ausgelesen werden.

Das Signatur-Server-Computersystem kann auch die für den Nutzer anlässlich von dessen initialer Registrierung gespeicherten Attributwerte zugreifen, um die entsprechenden Eingabefelder des elektronischen Dokuments automatisch auszufüllen. Dies kann anlässlich der Speicherung des elektronischen Dokuments in dem Document Safe des Nutzers erfolgen oder nachdem der Nutzer das elektronische Dokument in seinem Document Safe, zum Beispiel durch Anklicken, ausgewählt hat.

Fehlende Attribute können anschließend durch den Nutzer ergänzt werden, beispielsweise durch eine manuelle Eingabe.

Für die Eintragung weiterer Attribute in das Dokument, die nicht im Nutzerprofil des Nutzers gespeichert und zunächst nicht in dem ID-Token vorhanden sind, kann das in der zum Zeitpunkt der Anmeldung unveröffentlichten deutschen Patentanmeldung 10 2015 200 313.2, deren Offenbarungsgehalt voll umfänglich zum Offenbarungsgehalt der vorliegenden Patentanmeldung gemacht wird, beanspruchte Verfahren verwendet werden.

Insbesondere können fehlende Angaben mit den folgenden Schritten ergänzt werden:
- Senden einer ersten Attributspezifikation von dem Signatur-Computer-System an ein ID-Provider-Computersystem über das Kommunikationsnetzwerk, wobei die erste Attributspezifikation diejenigen Attribute spezifiziert, die das Signatur-Computer-System zum Ausfüllen der Eingabefelder des Dokumentes benötigt,
- Authentifizierung des Nutzers gegenüber dem ID-Token,
- Authentifizierung des ID-Provider-Computersystems gegenüber dem ID-Token,
- Authentifizierung des ID-Tokens gegenüber dem ID-Provider-Computersystem,
- Aufbau eines ersten gesicherten Übertragungskanals mit Ende-zu-Ende-Verschlüsselung zwischen dem ID-Token und dem ID-Provider-Computersystem über das Netzwerk,
- Durchführung eines ersten Lesezugriffs des ID-Provider-Computersystems auf den ID-Token zum Lesen der Attribute gemäß der ersten Attributspezifikation aus dem ID-Token,
- Übertragung einer in dem Speicherbereich des ID-Tokens gespeicherten ersten Teilmenge der in der ersten Attributspezifikation spezifizierten Attribute von dem ID-Token an das ID-Provider-Computersystem über den ersten gesicherten Übertragungskanal,
- Erzeugung einer zweiten Attributspezifikation einer zweiten Teilmenge der Attribute der ersten Attributspezifikation, die diejenige Attribute spezifiziert, welche in der ersten Teilmenge nicht beinhaltet sind und Übertragung der zweiten Attributspezifikation von dem ID-Provider-Computersystem an den ID-Token über den ersten gesicherten Übertragungskanal,
- Speicherung der zweiten Attributspezifikation in dem ID-Token,
- Authentifizierung eines Attribut-Provider-Computersystems gegenüber dem ID-Token,
- Authentifizierung des ID-Tokens gegenüber dem Attribute-Provider-Computersystem,
- Aufbau eines zweiten gesicherten Übertragungskanals mit Ende-zu-Ende-Verschlüsselung zwischen dem Attribut-Provider-Computersystem und dem ID-Token, wobei der erste gesicherte Übertragungskanal bestehen bleibt,
- Übertragung der zweiten Attributspezifikation von dem ID-Token über den zweiten gesicherten Übertragungskanal an das Attribut-Provider-Computersystem,
- Durchführung eines Schreibzugriffs des Attribut-Provider-Computersystems über den zweiten gesicherten Übertragungskanal zum Speichern von Attributen gemäß der zweiten Attributspezifikation in dem ID-Token,
- Durchführung eines zweiten Lesezugriffs des ID-Provider-Computersystems über den ersten gesicherten Übertragungskanal zum Lesen der von dem Attribut-Provider-Computersystem gemäß der zweiten Attributspezifikation in dem ID-Token gespeicherten Attribute,
- Ausgabe der aufgrund der Lesezugriffe von dem ID-Provider-Computersystem aus dem ID-Token ausgelesenen Attribute an das Signatur-Computer-System,
- Eintragung der Attribute in die Eingabefelder des Dokuments.

In einem weiteren Aspekt betrifft die Erfindung ein entsprechendes Telekommunikationsendgerät.

In einem weiteren Aspekt betrifft die Erfindung ein entsprechendes Signatur-Server-Computersystem.

In einem weiteren Aspekt betrifft die Erfindung ein Telekommunikationssystem mit einem Signatur-Server-Computersystem und zumindest einem erfindungsgemäßen Telekommunikationsendgerät. Zu dem Telekommunikationssystem kann auch der ID-Token des Nutzers gehören.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Telekommunikationssystems,
- Figur 2: ein UML-Diagramm zur Darstellung einer Ausführungsform eines erfindungsgemäßen Verfahrens,
- Figur 3: ein UML-Diagramm zur Darstellung der Erzeugung einer Signatur gemäß einer Ausführungsform des erfindungsgemäßen Verfahrens,
- Figur 4: ein Blockdiagramm einer weiteren Ausführungsform eines erfindungsgemäßen Telekommunikationssystems.
- Figur 5: ein Blockdiagramm einer weiteren Ausführungsform eines erfindungsgemäßen Telekommunikationssystems.

Elemente der nachfolgenden Ausführungsformen, die einander entsprechen oder gleichen, werden im Weiteren mit identischen Bezugszeichen gekennzeichnet.

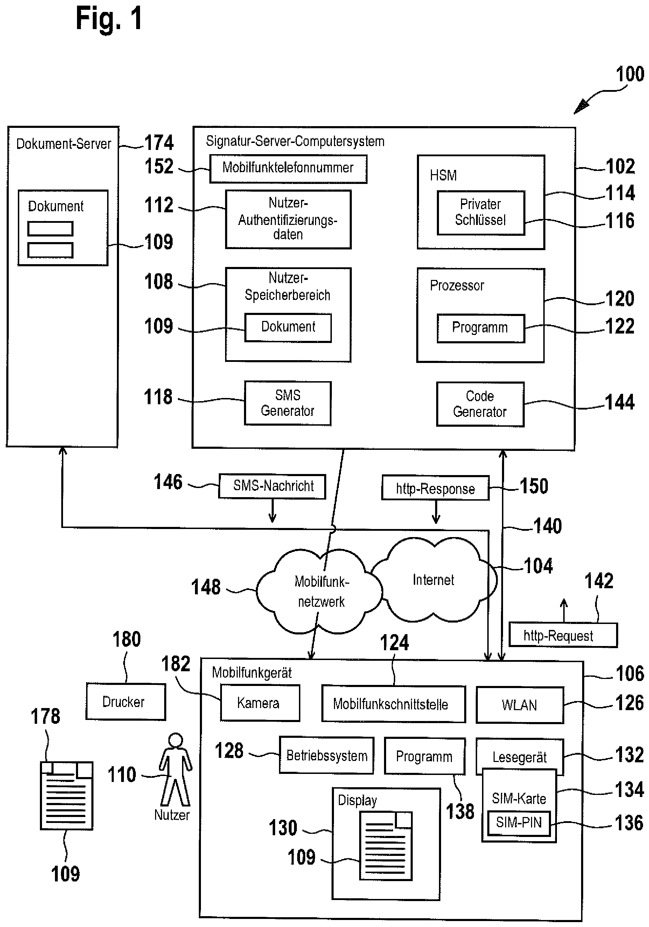

Die Figur 1 zeigt ein Telekommunikationssystem 100 mit einem Signatur-Server-Computersystem 102, welches über ein Netzwerk 104, insbesondere das Internet, mit einem Telekommunikationsendgerät 106 kommunizieren kann.

Das Signatur-Server-Computersystem 102 hat einen Nutzer-Speicherbereich 108, in dem zumindest ein elektronisches Dokument 109 gespeichert werden kann. Bei dem Nutzer-Speicherbereich 108 handelt es sich um einen geschützten Speicherbereich, der nur für den Nutzer 110 zugänglich ist, das heißt einen sogenannten virtuellen Document Safe.

Das Signatur-Server-Computersystem 102 speichert Nutzer-Authentifizierungsdaten 112 des Nutzers 110, wie zum Beispiel eine Username/Passwort-Kombination des Nutzers 111, welche dieser zum Einloggen in das Signatur-Server-Computersystem 102 benötigt. Das Signatur-Server-Computersystem 102 verfügt ferner über ein HSM 114, in dem ein privater Schlüssel 116 des Nutzers 110 sowie gegebenenfalls weiterer registrierter Nutzer gespeichert ist.

Das Signatur-Server-Computersystem 102 hat einen SMS-Generator 118 zum Generieren und Senden von SMS-Nachrichten sowie zumindest einen Prozessor 120 zur Ausführung eines Computerprogramms 122, welches zur Ausführung und Steuerung der das Signatur-Server-Computersystem betreffenden Schritte des Verfahrensablaufs dient.

Das Signatur-Server-Computersystem 102 verfügt ferner über einen Code-Generator 144 zur Erzeugung eines Codes, bei dem es sich zum Beispiel um einen Zufallswert oder einen Pseudo-Zufallswert handeln kann. Insbesondere kann der Code-Generator 144 als Binary Symmetric Source zur Erzeugung von Codes maximaler Entropie ausgebildet sein.

Das Telekommunikationsendgerät 106 verfügt zumindest über eine Mobilfunk-Schnittstelle 124, die sowohl zur Kommunikation über den Seitenkanal des Mobilfunknetzes, insbesondere zum Empfang von SMS-Nachrichten, als auch zur Verbindung mit dem Internet ausgebildet sein kann. Das Telekommunikationsendgerät 106 kann über ein oder mehrere weitere drahtlose Kommunikations-Schnittstellen verfügen, wie zum Beispiel eine WLAN-Schnittstelle 126, über die ebenfalls eine Internet-Session aufgebaut werden kann.

Das Telekommunikationsendgerät 106 hat ein Betriebssystem 128, wie zum Beispiel ein iOS-, Android- oder Windows-Betriebssystem, eine Anzeigevorrichtung, das heißt ein Display 130, insbesondere zur Anzeige des Dokuments 109, sowie ein Lesegerät 132 zum Einführen einer SIM-Karte 134, auf der Referenzdaten für die Authentifizierung des Nutzers gegenüber dem Telekommunikationsendgerät 106 mit der darin befindlichen SIM-Karte 134 gespeichert sind, nämlich beispielsweise die sogenannte SIM-PIN 136 des Nutzers 110.

Das Telekommunikationsendgerät 106 verfügt ferner über ein Programm 138 zur Ausführung der das Telekommunikationsendgerät 106 betreffenden Schritte des Verfahrens. Das Programm 138 kann als ein übliches Internetbrowser-Programm ausgebildet sein, wie zum Beispiel Microsoft Internet Explorer, Safari, Google Chrome, Firefox. Alternativ kann es sich bei dem Programm 138 um ein spezielles Anwendungsprogramm, das heißt eine sogenannte App, handeln. Das Telekommunikationsendgerät verfügt darüber hinaus über eine Kamera 182.

Das Telekommunikationssystem 100 weist des Weiteren einen Dokument Server 174 auf, auf dem das zu signierende Dokument 109 gespeichert ist. Der Dokument-Server 174 kann auf einem Speicher Signatur-Computer-System 102 gespeichert sein. Es ist aber auch möglich, dass das Signatur-Computer-System 102 oder das Telekommunikationsendgerät über ein Kommunikationsnetz, insbesondere über das Internet, eine Verbindung zum Dokument Server 174 aufbauen können. Das Dokument 109 ist auf dem Dokument-Server 174 bereitgestellt und kann von diesem heruntergeladen werden. Dies kann über eine Internet-Session 176 erfolgen, die nicht unbedingt gesichert sein muss, das heißt beispielsweise eine http-Session.

Das Dokument 109 hat einen eindeutigen Identifikator, wie zum Beispiel eine URL, mithilfe derer das Dokument 109 von dem Dokumentserver 174 heruntergeladen werden kann.

Diese URL ist in Form eines optisch lesbaren Codes 178, zum Beispiel als Barcode oder QR-Code, zum Beispiel auf der Frontseite einer Kopie des Dokuments 109 oder einer Werbung abgedruckt. Der Nutzer 110, dem das Dokument 109 beispielsweise per Post zugegangen ist, oder der eine Anzeige für dieses Dokument sieht, kann nun mithilfe der Kamera 182 seines Telekommunikationsendgerätes 106 den optisch lesbaren Code 178 aufnehmen, um die URL für den Zugriff auf das Dokument 109 zu erfassen.

Die so erfasste URL wird von dem Telekommunikationsendgerät 106 zum Beispiel als SMS-Nachricht 184 an das Signatur-Server-Computersystem 102 gesendet.

Das Signatur-Server-Computersystem 102 identifiziert den Nutzer 110 als Absender der SMS-Nachricht 184 aufgrund von dessen registrierter Mobilfunktelefonnummer 152. Das Signatur-Server-Computersystem 102 verwendet dann den in der SMS-Nachricht 184 beinhalteten Identifikator des Dokuments 109, das heißt beispielsweise die URL, um auf das Dokument 109 über das Netzwerk 104 zuzugreifen, und das Dokument 109 in den Nutzer-Speicherbereich 108 zu laden, sodass es dann anschließend nach einer entsprechenden Signaturanforderung (vergleiche Schritt 210) signiert wird.

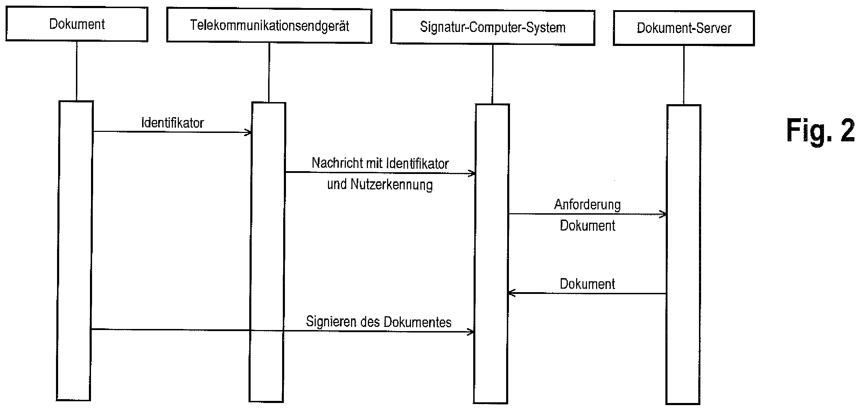

Die Figur 2 zeigt ein UML-Diagramm einer Ausführungsform eines entsprechenden Verfahrens.

Zur Erzeugung einer elektronischen Signatur des Nutzers 110 für das elektronische Dokument 109 wird wie folgt vorgegangen:
1. Zwischen dem Telekommunikationsendgerät 106 und dem Signatur-Server-Computersystem 102 wird über das Netzwerk 104 eine gesicherte Internet-Session 140 aufgebaut.
   Wenn es sich bei dem Programm 138 um einen Internetbrowser handelt, erfolgt dies beispielsweise so, dass der Nutzer 110 das Programm 138 startet und eine URL des Signatur-Server-Computersystems 102 eingibt. Daraufhin wird dann beispielsweise über die WLAN-Schnittstelle 126 des Telekommunikationsendgerätes 106 die Internet-Session 140 aufgebaut, über die sich der Nutzer 110 dann gegenüber dem Signatur-Server-Computersystem 102 authentifizieren muss, beispielsweise durch Eingabe seiner Username/Passwort-Kombination, die von dem Signatur-Server-Computersystem zum Einloggen des Nutzers mit den dort gespeicherten Nutzer-Authentifizierungsdaten 112 abgeglichen wird. Durch das Einloggen des Nutzers 110 wird dieser gegenüber dem Signatur-Server-Computersystem 102 identifiziert und authentifiziert, und der Nutzer 110 erhält über die Internet-Session 140 Zugang auf seinen ihm zugeordneten Nutzer-Speicherbereich 108. In diesem Nutzer-Speicherbereich 108 können bereits ein oder mehrere Dokumente, insbesondere das Dokument 109, gespeichert sein. Alternativ kann der Nutzer 110 das Dokument 109 über die Internet-Session 140 auf das Signatur-Server-Computersystem 102 hochladen, sodass es dort in den Nutzer-Speicherbereich 108 gespeichert wird.
2. Der Nutzer 110 kann dann die Erzeugung einer elektronischen Signatur für das Dokument 109 von dem Signatur-Server-Computersystem 102 anfordern. Hierbei kann so vorgegangen werden, dass der Nutzer 110 über die Internet-Session 140 das Dokument 109 zunächst selektiert, zum Beispiel durch eine entsprechende Eingabe auf dem Display 130, welches als Touch-Sensitive-Dispiay ausgebildet sein kann, woraufhin das Dokument 109 aus dem Nutzer-Speicherbereich 108 über die Internet-Session 140 zu dem Telekommunikationsendgerät 106 übertragen und auf dem Display 130 angezeigt wird, sodass der Nutzer 110 den Inhalt des Dokuments 109 zur Kenntnis nehmen kann. Nunmehr kann der Nutzer 110 in sein Telekommunikationsendgerät 106 eine Signaturanforderung zum Signieren des Dokuments 109 eingeben, welche zum Beispiel als http-Request 142 über die Internet-Session 140 an das Signatur-Server-Computersystem 102 übertragen wird. Das Signatur-Server-Computersystem 102 erzeugt daraufhin einen Code für diese Signaturanforderung des Nutzers mithilfe des Code-Generators 144.
   Das Signatur-Server-Computersystem 102 sendet dann diesen Code über einen Seitenkanal des Kommunikationsnetzes 148, beispielsweise in Form einer SMS-Nachricht 146, an das Telekommunikationsendgerät 106. Beispielsweise greift das Signatur-Server-Computersystem 102 dazu auf die Mobilfunktelefonnummer 152 des Nutzers 110, die als Teil der Registrierungsdaten des Nutzers 110 in den Signatur-Server-Computersystem 102 gespeichert ist, zu, um die SMS-Nachricht 146 an das Telekommunikationsendgerät 106 zu senden.
3. Das Signatur-Server-Computersystem 102 antwortet ferner auf den http-Request 142 mit einer Antwort, das heißt einer http-Response 150, die eine Eingabeaufforderung zur Eingabe einer Kombination des zuvor mit der SMS-Nachricht 146 gesendeten Codes und einer Authentifizierungsinformation des Nutzers für die Freigabe der Signaturfunktion beinhaltet. Bei der Authentifizierungsinformation zur Freigabe der Signaturfunktion kann es sich um die sogenannte Signatur-PIN des Nutzers handeln. Der Nutzer gibt daraufhin den zuvor mit der SMS-Nachricht 146 empfangenen Code sowie seine Signatur-PIN in das Telekommunikationsendgerät 106 ein, um auf die http-Response 150 zu antworten. Daraufhin werden der Code und die Authentifizierungsinformation über die Internet-Session 140 von dem Telekommunikationsendgerät 106 an das Signatur-Server-Computersystem 102 übertragen.
4. Durch das Programm 122 wird geprüft, ob der über die Internet-Session 140 empfangene Code mit dem zuvor mit der SMS-Nachricht 146 gesendeten Code übereinstimmt und ob ferner die Signatur-PIN des Nutzers zutreffend ist. Wenn sowohl der Code als auch die Authentifizierungsinformation valide sind, wird durch das Programm 122 der HSM 140 angesteuert, um mithilfe des privaten Schlüssels 116 des Nutzers 110 eine Signatur des Nutzers 110 für das Dokument 109 zu generieren. Das resultierende signierte Dokument 109 kann dann zum Beispiel von dem Signatur-Server-Computersystem 102 in den Nutzer-Speicherbereich 108 gespeichert werden, sodass der Nutzer 110 für die weitere Verwendung dieses signierten Dokuments darauf zugreifen kann, zum Beispiel indem der Nutzer 110 das signierte Dokument 109 an einen Dritten über das Netzwerk 104 weiterleitet. Das Weiterleiten des signierten Dokuments an einen Dritten kann auch automatisiert durch das Signatur-Server-Computersystem 102 erfolgen.

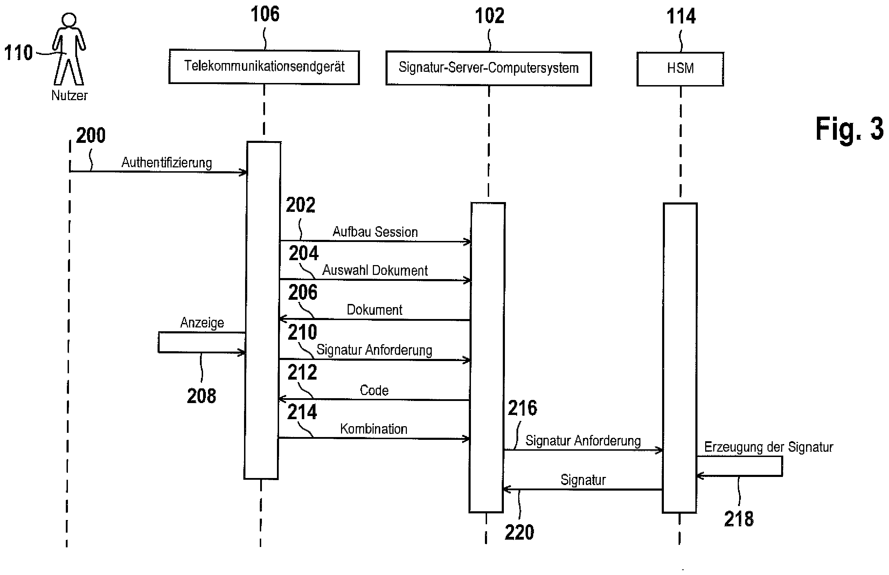

Die Figur 3 zeigt ein UML-Diagramm einer Ausführungsform eines entsprechenden Verfahrens.

In dem Schritt 200 authentifiziert sich der Nutzer 110 zunächst gegenüber seinem Telekommunikationsendgerät 106, indem er seine SIM-PIN in das Telekommunikationsendgerät 106 eingibt, die von dem Telekommunikationsendgerät 106 über das Lesegerät 132 an die SIM-Karte 134 weitergeleitet wird, die die eingegebene SIM-PIN auf Übereinstimmung mit der in der SIM-Karte gespeicherten SIM-PIN 136 überprüft. Nach erfolgreicher Authentifizierung kann der Nutzer 110 dann die verschiedenen Funktionen des Telekommunikationsendgerätes 106 nutzen.

In dem Schritt 202 wird die Internet-Session 140 aufgebaut, beispielsweise durch Starten des Programms 138, welches als Internetbrowser oder als spezielle App ausgebildet sein kann. Der Nutzer 110 authentifiziert sich dann gegenüber dem Signatur-Server-Computersystem, beispielsweise durch Eingabe seiner Username/Passwort-Kombination, sodass er sich in das Signatur-Server-Computersystem 102 einloggt.

In dem Schritt 204 wählt der Nutzer 110 eines der in seinem Nutzer-Speicherbereich 108 gespeicherten Dokumente, wie zum Beispiel das Dokument 109, aus. Das ausgewählte Dokument wird dann in dem Schritt 206 von dem Signatur-Server-Computersystem 102 über die Internet-Session 140 an das Telekommunikationsendgerät 106 übertragen und dort in dem Schritt 208 angezeigt. Wenn der Nutzer 110 nun das angezeigte Dokument 109 signieren möchte, so gibt er in das Telekommunikationsendgerät 106 eine entsprechende Anforderung ein, die in dem Schritt 210 über die Internet-Session 140 an das Signatur-Server-Computersystem 102 übertragen wird.

Das Signatur-Server-Computersystem 102 generiert daraufhin einen Code, wie zum Beispiel einen Zufallswert oder Pseudo-Zufallswert, der in dem Schritt 212 über einen Seitenkanal des Kommunikationsnetzes 148, beispielsweise einen Signalisierungskanal eines Mobilfunknetzes, zum Beispiel als SMS-Nachricht 146, an das Telekommunikationsendgerät 106 gesendet wird.

In dem Schritt 214 gibt der Nutzer 110 den Code sowie seine Signatur-PIN in das Programm 138 ein, sodass diese Kombination von Code und Signatur-PIN in dem Schritt 214 über die Internet-Session 140 an das Signatur-Server-Computersystem 102 übertragen wird. Das Signatur-Server-Computersystem 102 prüft dann die Validität der Kombination des empfangenen Codes und der Signatur-PIN, das heißt es prüft, ob der über die Internet-Session 140 empfangene Code mit dem zuvor mit der SMS-Nachricht gesendeten Code 146 übereinstimmt und ob die Signatur-PIN des Nutzers 110 zutreffend ist.

Im Fall der Validität des Codes und der Signatur-PIN erfolgt in dem Schritt 216 eine Signaturanforderung des Signatur-Server-Computersystems 102 an das HSM 114, um die Erzeugung einer Signatur für das Dokument 109 anzufordern. Das HSM 114 erzeugt dann in dem Schritt 218 diese Signatur mithilfe des privaten Schlüssels 116 des Nutzers 110 und liefert in dem Schritt 220 die Signatur des Dokuments 109 an das Signatur-Server-Computersystem 102.

Das Signatur-Server-Computersystem 102 speichert dann das signierte Dokument 109 beispielsweise in dem Nutzer-Speicherbereich 108 für die weitere Verwendung durch den Nutzer 110 und/oder es leitet das signierte Dokument 109 automatisch an einen Dritten, wie zum Beispiel einen Erklärungsempfänger oder Vertragspartner des Nutzers 110, weiter.

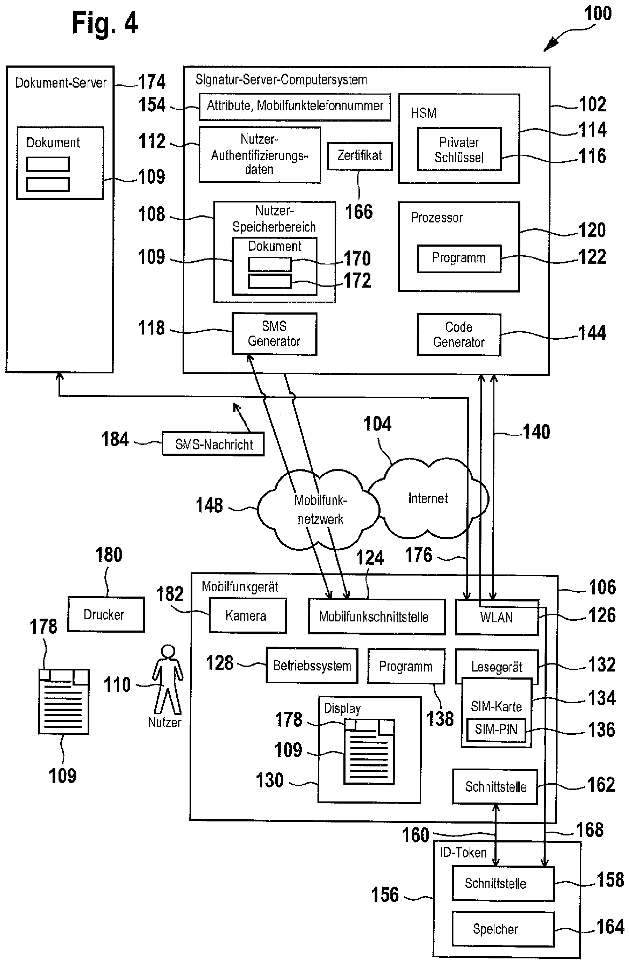

Die Figur 4 zeigt ein Blockdiagramm einer weiteren Ausführungsform eines erfindungsgemäßen Telekommunikationssystems 100. Bei der hier betrachteten Ausführungsform speichert das Signatur-Server-Computersystem Registrierungsdaten 154 des Nutzers 110, zu denen neben der Mobilfunktelefonnummer 152 auch Attribute mit den dazugehörigen Attributwerten des Nutzers 110 gehören. Die initiale Registrierung des Nutzers 110 erfolgt dabei mithilfe eines ID-Tokens 156 des Nutzers 110, wie zum Beispiel einem elektronischen Ausweisdokument des Nutzers 110, insbesondere dem elektronischen Personalausweis der Bundesrepublik Deutschland.

Der ID-Token 156 hat eine Schnittstelle 158 zum Aufbau einer lokalen Verbindung 160 zu einer entsprechenden Schnittstelle 162 des Telekommunikationsendgerätes 106. Die Schnittstellen 158 und 162 können beispielsweise als RFID- oder NFC-Schnittstellen ausgebildet sein.

Der ID-Token 156 hat ferner einen elektronischen Speicher 164, in dem die Attributwerte von Attributen des Nutzers 110, wie zum Beispiel Name und Adresse des Nutzers 110, gespeichert sind. Für die initiale Registrierung des Nutzers 110 durch das Signatur-Server-Computersystem 102 wird wie folgt vorgegangen:
1. Der Nutzer bringt den ID-Token 156 in den Bereich der Schnittstelle 162, sodass die lokale Verbindung 160 aufgebaut werden kann. Der Nutzer authentifiziert sich gegenüber dem ID-Token 156 durch Eingabe entsprechender Authentifizierungsdaten, zum Beispiel in das Telekommunikationsendgerät 106 oder unmittelbar in den ID-Token 156, wenn dieser zum Beispiel über eine Tastatur oder einen biometrischen Sensor verfügt. Ferner authentifiziert sich auch das Signatur-Server-Computersystem 102 gegenüber dem ID-Token 156, beispielsweise indem das Signatur-Server-Computersystem 102 ein Zertifikat 166, welches insbesondere als sogenanntes Berechtigungszertifikat ausgebildet sein kann, über die Internet-Session 140, das Telekommunikationsendgerät 106 und die lokale Verbindung 160 an den ID-Token 156 überträgt. Dies dient zum Nachweis der Authentizität des Signatur-Server-Computersystems 102 und zum Nachweis von dessen Leseberechtigung der in dem Speicher 164 gespeicherten Attributwerte des Nutzers 110.
2. Nachdem diese beiden Authentifizierungen erfolgreich durchgeführt worden sind, wird eine Verbindung 168 mit Ende-zu-Ende-Verschlüsselung zwischen dem Signatur-Server-Computersystem 102 und dem ID-Token 156 aufgebaut, und zwar über die Internet-Session 140, das Telekommunikationsendgerät 106 und die lokale Verbindung 160. Dies erfolgt auf einer Anwendungsschicht.
3. Das Signatur-Server-Computersystem 102 sendet dann ein Lesekommando, das zum Beispiel als Chipkarten-Kommando ausgebildet sein kann, wie zum Beispiel eine sogenannte APDU, zum Lesen von Attributwerten aus dem Speicher 164 über die Verbindung 168 an den ID-Token 156, der daraufhin die angeforderten Attributwerte über die Verbindung 168 an das Signatur-Server-Computersystem 102 sendet. Das Signatur-Server-Computersystem 102 speichert die ausgelesenen Attributwerte als Teil der Registrierungsdaten 154 für den Nutzer 110.

Das Dokument 109 hat bei der hier betrachteten Ausführungsform Eingabefelder 170 und 172 zur Eingabe des Namens und der Adresse des Nutzers 110. Beispielsweise handelt es sich bei dem Dokument 109 um ein elektronisches Formular zur Abgabe einer Erklärung, zum Beispiel gegenüber einer Versicherung oder Behörde.

Das Signatur-Server-Computersystem 102 kann nun automatisch die Eingabefelder 170 und 172 ausfüllen, indem auf die Registrierungsdaten 154 des Nutzers 110 zugegriffen wird. Dies kann dadurch ausgelöst werden, dass das Dokument 109 in dem Nutzer-Speicherbereich 108 gespeichert wird oder beispielsweise dann, wenn der Nutzer 110 das Dokument auswählt (vergleiche Schritt 204 in der Ausführungsform gemäß Figur 3), sodass dem Nutzer 110 das bereits ausgefüllte Dokument auf dem Display 130 präsentiert wird. Der Nutzer 110 kann dann in dem angezeigten Dokument (vergleiche Schritt 208) erforderlichenfalls noch Angaben ergänzen, wobei dieser Änderungen über die Internet-Session 140 zu dem Server-Computersystem 102 übertragen werden und ebenfalls in dem dort gespeicherten Dokument 109 vorgenommen werden.

Der Nutzer kann dann die Signatur dieses so ausgefüllten Dokuments anfordern (vergleiche Schritt 210). Dies erspart dem Nutzer 110 die wiederholende Eingabe von seinen Stammdaten in elektronische Formulare.

Die Zuordnung der Eingabefelder 170 und 172 des Dokuments 109 zu entsprechenden Attributen des Nutzers 110, so wie sie in dem ID-Token 156 gespeichert und als Teil der Registrierungsdaten 154 auch auf dem Signatur-Server-Computersystem 102 vorhanden sind, kann durch eine semantische Verknüpfung erfolgen, das heißt die Attribute haben in dem ID-Token 156 und in den Registrierungsdaten 154 dieselbe Bezeichnung wie die entsprechenden Eingabefelder 170 und 172 des Dokuments 109. Hierdurch wird es ermöglicht, dass das Server-Computersystem 102 die entsprechenden Attributwerte des Nutzers 100 in die Eingabefelder 170 bzw. 172 automatisch einträgt, und zwar unabhängig von der konkreten Struktur oder dem Dateiformat des Dokuments 109 und ohne, dass dies für jedes einzelne Dokument im Speziellen programmiert werden müsste.

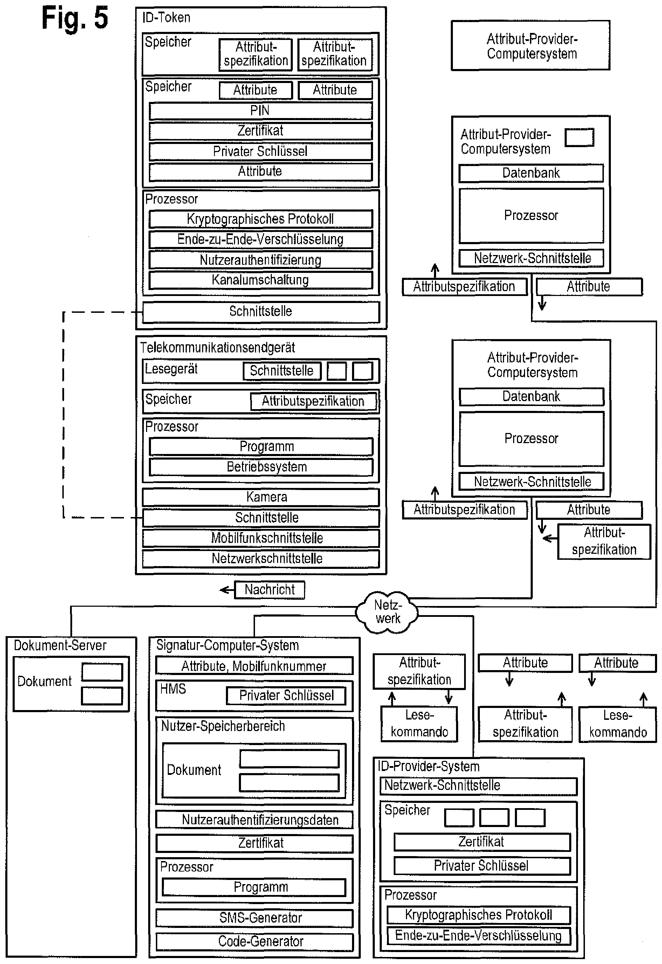

Figur 5 zeigt ein Telekommunikationssystem 100, das eine Ergänzung der Attributswerte ermöglicht.

Der ID-Token 156 hat einen elektronischen Speicher 164 mit geschützten Speicherbereichen 186, 188 und 190. Der geschützte Speicherbereich 186 dient zur Speicherung eines Referenzwerts, der für die Authentifizierung des Nutzers 110 gegenüber dem ID-Token 156 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 188 dient zur Speicherung eines privaten Schlüssels und der geschützte Speicherbereich 190 dient zur Speicherung von Attributen, zum Beispiel des Nutzers 110, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 164 kann ferner einen Speicherbereich 192 zur Speicherung eines Zertifikats aufweisen. Das Zertifikat beinhaltet einen öffentlichen Schlüssel, der dem in dem geschützten Speicherbereich 188 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 164 des ID-Tokens 156 gespeichert sein. Alternativ oder zusätzlich kann das Zertifikat auch in einem öffentlichen Verzeichnisserver gespeichert sein.

Der ID-Token 106 hat einen Prozessor 194. Der Prozessor 194 dient zur Ausführung von Programminstruktionen 196, 198 und 200. Die Programminstruktionen 196 dienen zur Nutzerauthentifizierung, d.h. zur Authentifizierung des Nutzers 110 gegenüber dem ID-Token.

Bei einer Ausführungsform mit PIN gibt der Nutzer 110 seine PIN zu seiner Authentifizierung ein, beispielsweise in das Telekommunikationsendgerät 106. Durch Ausführung der Programminstruktionen 196 wird dann auf den geschützten Speicherbereich 188 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 110 als authentifiziert.

Alternativ wird ein biometrisches Merkmal des Nutzers 110 erfasst. Beispielsweise hat der ID-Token 156 hierzu einen Fingerabdrucksensor oder ein Fingerabdrucksensor ist an das Telekommunikationsendgerät 106 angeschlossen. Die von dem Nutzer 110 erfassten biometrischen Daten werden durch Ausführung der Programminstruktionen 196 bei dieser Ausführungsform mit den in dem geschützten Speicherbereich 188 gespeicherten biometrischen Referenzdaten verglichen. Bei hinreichender Übereinstimmung der von dem Nutzer 110 erfassten biometrischen Daten mit den biometrischen Referenzdaten gilt der Nutzer 110 als authentifiziert.

Die Programminstruktionen 200 dienen zur Ausführung der den ID-Token 156 betreffenden Schritte eines kryptographischen Protokolls zur Authentifizierung eines ID-Provider-Computersystems 202 gegenüber dem ID-Token 156. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 202 gegenüber dem ID-Token und weist dadurch seine Leseberechtigung zum Lesen der in dem geschützten Speicherbereich 192 gespeicherten Attribute nach. Die Authentifizierung kann auch gegenseitig sein, d.h. auch der ID-Token 156 muss sich dann gegenüber dem ID-Provider-Computersystem 202 nach demselben oder einem anderen kryptographischen Protokoll authentifizieren.

Die Programminstruktionen 198 dienen zur Ende-zu-Ende-Verschlüsselung von zwischen dem ID-Token 156 und dem ID-Provider-Computersystem 202 übertragenen Daten, zumindest aber der von dem ID-Provider-Computersystem 202 aus dem geschützten Speicherbereich 190 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 156 und dem ID-Provider-Computersystem 202 vereinbart wird.

Alternativ zu der in der Figur 5 dargestellten Ausführungsform kann das Telekommunikationsendgerät 106 mit seiner Schnittstelle 162 nicht unmittelbar mit der Schnittstelle 158 kommunizieren, sondern über ein an die Schnittstelle 162 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 202 hat eine Netzwerk-Schnittstelle 204 zur Kommunikation über das Netzwerk 104. Das ID-Provider-Computersystem 202 hat ferner einen Speicher 206, in dem ein privater Schlüssel 208 des ID-Provider-Computersystems 202 sowie das entsprechende Zertifikat 210 gespeichert ist. Auch bei diesem Zertifikat kann es sich beispielsweise um ein Zertifikat nach einem PKI-Standard, wie zum Beispiel X.509 handeln.

Das ID-Provider-Computersystem 202 hat ferner zumindest einen Prozessor 212 zur Ausführung von Programminstruktionen 214 und 216. Durch Ausführung der Programminstruktionen 215 werden die das ID-Provider-Computersystem 202 betreffende Schritte des kryptographischen Protokolls ausgeführt. Insgesamt wird also das kryptographische Protokoll durch Ausführung der Programminstruktionen 200 durch den Prozessor 194 des ID-Tokens 106 sowie durch Ausführung der Programminstruktionen 146 durch den Prozessor 212 des ID-Provider-Computersystems 202 implementiert.

Die Programminstruktionen 148 dienen zur Implementierung der Ende-zu-Ende-Verschlüsselung auf Seiten des ID-Provider-Computersystems 202, beispielsweise basierend auf dem symmetrischen Schlüssel, der anlässlich der Ausführung des kryptographischen Protokolls zwischen dem ID-Token 106 und dem ID-Provider-Computersystem 202 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Heilman-Schlüsselaustausch.

Das ID-Provider-Computersystem 202 befindet sich vorzugsweise in einer besonders geschützten Umgebung, insbesondere in einem so genannten Trust-Center, sodass das ID-Provider-Computersystem 202 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Das Signatur-Server-Computersystem 102 kann, wie in Figur 4 beschrieben, automatisch die Eingabefelder 170 und 172 ausfüllen des Dokumentes 109 ausfüllen, indem auf die Registrierungsdaten 154 des Nutzers 110 zugegriffen wird.

Die Zuordnung der Eingabefelder 170 und 172 des Dokuments 109 zu entsprechenden Attributen des Nutzers 110, so wie sie in dem ID-Token 156 gespeichert und als Teil der Registrierungsdaten 154 auch auf dem Signatur-Server-Computersystem 102 vorhanden sind, kann durch eine semantische Verknüpfung erfolgen, das heißt die Attribute haben in dem ID-Token 156 und in den Registrierungsdaten 154 dieselbe Bezeichnung wie die entsprechenden Eingabefelder 170 und 172 des Dokuments 109. Hierdurch wird es ermöglicht, dass das Server-Computersystem 102 die entsprechenden Attributwerte des Nutzers 100 in die Eingabefelder 170 bzw. 172 automatisch einträgt, und zwar unabhängig von der konkreten Struktur oder dem Dateiformat des Dokuments 109 und ohne, dass dies für jedes einzelne Dokument im Speziellen programmiert werden müsste.

Das Signatur-Computer-System 102 hat eine Netzwerk-Schnittstelle zur Verbindung mit dem Netzwerk 104. Ferner hat das Signatur-Computer-System 102 zumindest einen Prozessor 120 zur Ausführung von Programminstruktionen 122. Durch Ausführung der Programminstruktionen 122 werden beispielsweise dynamische HTML-Seiten generiert, über die der Nutzer 102 seinen Auftrag oder seine Bestellung eingeben kann.

Je nach Art des Dokumentes 109 können aber weitere Attribute erforderlich sein, die nicht im Nutzerprofil des Nutzers 110 gespeichert und/ die in dem ID-Token zunächst nicht vorhanden sind. Hierzu kann das in der Figur 1 gezeigte Telekommunikationssystem 100 ein oder mehrere Attribut-Provider-Computersysteme 214, 216, 218, ... aufweisen. Diese können prinzipiell gleich aufgebaut sein wie das ID-Provider-Computersystem und verfügen über zusätzliche Funktionalitäten zum Lesen oder Generieren von Attributen sowie zum Schreiben von Attributen und erforderlichenfalls Attributspezifikationen in den ID-Token.

Für die Eintragung weiterer Attribute in das Dokument 109, die nicht im Nutzerprofil des Nutzers 110 gespeichert und zunächst nicht in dem ID-Token vorhanden sind, wird wie folgt vorgegangen:
a) Das Signatur-Computer-System 102 sendet eine erste Attributspezifikation 220, die diejenigen Attribute spezifiziert, die für das Ausfüllen des Dokumentes benötigt werden. Diese erste Attributspezifikation spezifiziert beispielsweise eine Anzahl von M Attributen A1, A2, A3, ... AM.
b) Beispielsweise wird die Attributspezifikation 220 in einem Speicher 222 des Telekommunikationsendgeräts 106 zwischengespeichert. Aufgrund des Empfangs der Attributspezifikation 220 durch das Telekommunikationsendgerät 106 wird der Nutzer 110 dazu aufgefordert, sich gegenüber dem ID-Token 156 zu authentifizieren. Hierzu gibt der Nutzer 110 seine PIN zum Beispiel über das Lesegerät 132 oder eine Tastatur des Telekommunikationsendgeräts 106 ein. Ferner baut das Telekommunikationsendgerät 106 zu dem ID-Provider-Computersystem 202 eine weitere Internetsession über das Netzwerk 104 auf, über die sich das ID-Provider-Computersystem 202 gegenüber dem Telekommunikationsendgerät 110 authentifiziert, und zwar unter Verwendung des Zertifikats 210.
   Vorzugsweise erfolgt eine gegenseitige Authentifizierung des IT-Tokens 156 und des ID-Provider-Computersystems 202 bzw. des jeweiligen Attribut-Provider-Computersystems unter Verwendung der Zertifikate 192 und 210, das heißt eine sogenannte CA und eine TA. Hierbei wird auch ein Session Key vereinbart, mit dem der erste gesicherte Übertragungskanal mit Ende-zu-Ende-Verschlüsselung zwischen dem ID-Token 156 und dem ID-Provider-Computersystem über das Telekommunikationsendgerät 106 und das Netzwerk 104 aufgebaut wird. Ferner leitet das Telekommunikationsendgerät 106 die Attributspezifikation 220 über die mit dem ID-Provider-Computersystem 202 bestehende Session an das ID-Provider-Computersystem 202 weiter.
c) Das ID-Provider-Computersystem 202 antwortet auf die erste Attributspezifikation 220 mit einem Lesekommando 222 zum Lesen der in der ersten Attributspezifikation spezifizierten Attribute. Dieses Lesekommando 222 wird über den ersten gesicherten Übertragungskanal mit Ende-zu-Ende-Verschlüsselung von dem ID-Provider-Computersystem 202 an den ID-Token 156 übertragen. Der Prozessor 194 greift daraufhin auf den elektronischen Speicher 164 zu, um die Attribute gemäß der ersten Attributspezifikation 220 auszulesen. Im Weiteren wird ohne Beschränkung der Allgemeinheit davon ausgegangen, dass von den M Attributen gemäß der ersten Attributspezifikation 220 nur P Attribute A1, A2, A3, ..., AP vorhanden sind, wobei P < M. Auf das Lesekommando 222 antwortet der ID-Token 156 mit der Antwort 224, die die erste Teilmenge der in der ersten Attributspezifikation 220 spezifizierten Attribute, nämlich die Attribute A1, A2, A3, ..., AP beinhaltet. Die Antwort 224 wird über den ersten gesicherten Übertragungskanal von dem ID-Token 156 an das ID-Provider-Computersystem 202 übertragen.
d) Das ID-Provider-Computersystem 202 speichert die Antwort 224 mit der ersten Teilmenge der Attribute in seinem Speicher 206 und erzeugt eine zweite Attributspezifikation 226, welche die noch fehlenden Attribute spezifiziert, das heißt diejenigen der ersten Attributspezifikation 220 spezifizierten Attribute, die in der Antwort 224 nicht beinhaltet sind, das heißt hier die Attribute AP+1 bis AM. Die zweite Attributspezifikation 226 wird über den ersten gesicherten Übertragungskanal von dem ID-Provider-Computersystem 202 zu dem ID-Token 156 übertragen und dort gespeichert und kann bei Speicherung in dem nicht-flüchtigen oder flüchtigen Speicher eine bereits vorhandene Attributspezifikation ersetzen. Die Speicherung kann beispielsweise in einem flüchtigen Speicher 228 des IT-Tokens 156 erfolgen.
e) Das Telekommunikationsendgerät 106 baut eine weitere Internetsession über das Netzwerk 104 mit dem Attribut-Provider-Computersystem 214 auf. Das Attribut-Provider-Computersystem 214 authentifiziert sich dann gegenüber dem ID-Token 156, wobei vorzugsweise eine gegenseitige Authentifizierung, das heißt eine CA und eine TA, durchgeführt werden. Hierbei wird ein zweiter gesicherter Übertragungskanal mit Ende-zu-Ende-Verschlüsselung mit einem Session Key zwischen dem ID-Token 156 und dem Attribut-Provider-Computersystem 214 über das Netzwerk 104 und das Telekommunikationsendgerät 106 aufgebaut, wobei der erste gesicherte Übertragungskanal bestehen bleibt.
   Der Prozessor 194 dient zur Ausführung von Programminstruktionen 230 für die Kanalumschaltung, das heißt die Auswahl einer der gesicherten Übertragungskanäle, das heißt hier des ersten oder des zweiten gesicherten Übertragungskanals, für die externe Kommunikation. Aufgrund des Aufbaus des zweiten gesicherten Übertragungskanals wird durch Ausführung der Programminstruktionen 230 der zweite gesicherte Übertragungskanal von dem Prozessor 194 ausgewählt, über den der ID-Token 156 dann die zweite Attributspezifikation 226 an das Attribut-Provider-Computersystem 214 sendet.
f) Das Attribut-Provider-Computersystem 214 führt daraufhin einen Zugriff auf seine Datenbank 232 durch, um die Attribute gemäß der zweiten Attributspezifikation 226 zu lesen. Das Attribut-Provider-Computersystem 214 antwortet dann auf die Attributspezifikation 226 mit seiner Antwort 234, die die aus der Datenbank 232 gelesenen Attribute beinhaltet und sendet diese Antwort 234 über den zweiten gesicherten Übertragungskanal an den ID-Token 156, welcher die Antwort 234 mit diese Attributen mit seinem elektronischen Speicher 164 speichert.
g) Durch Ausführung der Programminstruktionen 230 schaltet der ID-Token 156 dann auf den ersten gesicherten Übertragungskanal zurück. Das ID-Provider-Computersystem 202 greift dann durch ein zweites Lesekommando 236 über den ersten gesicherten Übertragungskanal auf den ID-Token 156 zu und erhält als Antwort darauf von dem ID-Token 156 die Antwort 234 aus dem Speicher 164 mit den noch fehlenden Attributen.

Für den Fall, dass das Attribut-Provider-Computersystem 214 nicht auf sämtliche gemäß der zweiten Attributspezifikation 226 erforderlichen Attribute zugreifen kann, beispielsweise weil diese nicht sämtlich in der Datenbank 232 gespeichert sind, kann der oben genannte Vorgang iterativ unter Verwendung der weiteren Attribut-Provider-Computersysteme 216, 218, ... durchgeführt werden, und zwar so lange, bis sämtliche der Attribute gemäß der ersten Attributspezifikation 220 in dem Speicher 164 vorliegen oder eine andere Abbruchbedingung erreicht ist.

Falls das Attribut-Provider-Computersystem 214 nicht sämtliche der Attribute gemäß der zweiten Attributspezifikation 226 ermitteln kann, so generiert das Attribut-Provider-Computersystem 214 eine dritte Attributspezifikation 238. Wenn beispielsweise die Antwort 234 die Attribute AP+1 bis AQ beinhaltet mit Q < M, so werden in der dritten Attributspezifikation 238 die noch fehlenden Attribute AQ+1 bis AM spezifiziert. Diese dritte Attributspezifikation 238 wird von dem Attribut-Provider-Computersystem 214 über den zweiten gesicherten Übertragungskanal zu dem ID-Token 156 übertragen und ersetzt oder aktualisiert die in dem Speicher 228 gespeicherte zweite Attributspezifikation 226.

Anschließend wird dann nach vorheriger CA und TA ein dritter gesicherter Übertragungskanal zu dem Attribut-Provider-Computersystem 218 aufgebaut, welches die dritte Attributspezifikation 178 aus dem ID-Token 156 ausliest und darauf mit einer Antwort 240 antwortet, die die noch fehlenden Attribute gemäß der dritten Attributspezifikation 238 beinhaltet. Diese Antwort 240 wird über den dritten gesicherten Übertragungskanal von dem Attribut-Provider-Computersystem 218 an den ID-Token 156 übertragen und in dem Speicher 164 gespeichert.

Durch Ausführung der Programminstruktionen 230 wird dann wiederum auf den ersten gesicherten Übertragungskanal zurückgeschaltet, sodass aufgrund des zweiten Lesekommandos 236 in diesem Fall sowohl die Antwort 234 als auch die Antwort 240, die insgesamt die Attribute AP+1 bis AM beinhalten, an das ID-Provider-Computersystem 202 übertragen werden.

Falls seitens des Attribut-Provider-Computersystems 216 nicht sämtliche der Attribute gemäß der dritten Attributspezifikation 238 verfügbar sind, kann in analoger Art und Weise iterativ weiterverfahren werden, indem ein oder mehrere weitere Attribut-Provider-Computersysteme, wie zum Beispiel das Attribut-Provider-Computersystem 218, in den Ablauf eingebunden werden.

Das ID-Provider-Computersystem 202 verfügt nach einer erfolgreichen Durchführung der oben genannten Verfahrensschritte in seinem Speicher 206 über sämtliche der Attribute, die mit der ersten Attributspezifikation 220 angefordert worden sind. Das ID-Provider-Computersystem 202 generiert daraufhin eine Nachricht 242, die diese Attribute A1 bis AM beinhaltet, signiert diese Nachricht und sendet sie über das Netzwerk 104 an das Signatur-Computer-System 102, wobei dies über das Telekommunikationsendgerät 106 erfolgen kann.

Das Signatur-Computer-System 102 kann dann gegebenenfalls mithilfe der in der Nachricht 242 beinhalteten Attribute das Dokument 109 ausfüllen.

Anschließend kann, wie in Figur 3 beschrieben, eine Signatur für das Dokument 109 erzeugt werden.

Die Attribut-Provider-Computersysteme 214, 216, 218... können analog zu dem ID-Provider-Computersystem 202 aufgebaut sein, das heißt sie verfügen jeweils über eine Netzwerk-Schnittstelle, einen Prozessor zur Ausführung von Programminstruktionen und einen Speicher, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 156 spezifiziert ist.

Nach einer Ausführungsform der Erfindung werden die in der Antwort 234 bzw. 240 beinhalteten Attribute erst dann in dem Speicher 164 gespeichert, nachdem diese der Nutzer 110 zur Kenntnis nehmen konnte. Hierzu werden diese Attribute auf einem Display 244 angezeigt, welches zum Beispiel zu dem Lesegerät 132 gehört. Ferner kann beispielsweise auf dem Lesegerät 132 ein Bedienelement 246 vorhanden sein, über welches der Nutzer 110 eine Eingabe tätigen muss, um die Speicherung der in den Antworten 234 bzw. 240 beinhalteten Attribute in dem Speicher 164 zu genehmigen. Hierdurch erhält der Nutzer 110 eine Kontrollmöglichkeit bezüglich der möglicherweise seine Person betreffenden zusätzlichen Attribute in dem Speicher 164.

### Bezugszeichenliste

- 100: Telekommunikationssystem
- 102: Signatur-Server-Computersystem
- 104: Netzwerk
- 106: Telekommunikationsendgerät
- 108: Nutzer-Speicherbereich
- 109: elektronisches Dokument
- 110: Nutzer
- 112: Nutzer-Authentifizierungsdaten
- 114: HSM
- 116: privater Schlüssel
- 118: SMS-Generator
- 120: Prozessor
- 122: Computerprogramm
- 124: Mobilfunk-Schnittstelle
- 126: WLAN-Schnittstelle
- 128: Betriebssystem
- 130: Display
- 132: Lesegerät
- 134: SIM-Karte
- 136: SIM-PIN
- 138: Programm
- 140: Internet-Session
- 142: http-Request
- 144: Code-Generator
- 146: SMS-Nachricht
- 148: Mobilfunknetz
- 150: http-Response
- 152: Mobilfunktelefonnummer
- 154: Registrierungsdaten
- 156: ID
- 158: Schnittstelle
- 160: lokale Verbindung
- 162: Schnittstelle
- 164: Speicher
- 166: Zertifikat
- 168: Verbindung
- 170: Eingabefeld
- 172: Eingabefeld
- 174: Dokument-Server
- 176: Internet-Session
- 178: optisch lesbarer Code
- 180: Drucker
- 182: Kamera
- 184: SMS-Nachricht
- 186: geschützter Speicherbereich
- 188: geschützter Speicherbereich
- 190: geschützter Speicherbereich
- 192: Speicherbereich
- 194: Prozessor
- 196: Programminstruktionen
- 198: Programminstruktionen
- 200: Programminstruktionen
- 202: ID-Provider-Computersystem
- 204: Netzwerk-Schnittstelle
- 206: Speicher
- 208: privater Schlüssel
- 210: Zertifikat
- 212: Prozessor
- 214: Attribut-Provider-Computersystem
- 216: Attribut-Provider-Computersystem
- 218: Attribut-Provider-Computersystem
- 220: erste Attributspezifikation
- 222: Lesekommando
- 224: Antwort
- 226: zweite Attributspezifikation
- 228: flüchtiger Speicher
- 230: Programminstruktionen
- 232: Datenbank
- 234: Antwort
- 236: Lesekommando
- 238: dritte Attributspezifikation
- 240: Antwort
- 242: Nachricht
- 244: Display
- 246: Bedienelement

## Patentansprüche

1. Verfahren zur Erzeugung einer elektronischen Signatur eines Nutzers (110) für ein elektronisches Dokument (109), das in einem elektronischen Speicher (174) gespeichert ist, wobei dem Nutzer (110) ein Telekommunikationsendgerät (106) eines Telekommunikationsnetzes (148) zugeordnet ist, mit folgenden Schritten:
- Erfassen eines Identifikators (178) des Dokuments (109) durch das Telekommunikationsendgerät (106),
- Senden einer Nachricht (184) vom Telekommunikationsendgerät (106) an ein Signatur-Computer-System (102), wobei die Nachricht den Identifikator und eine Kennung des Nutzers (110) beinhaltet,
- Zugreifen des Signatur-Computer-System (102) auf das Dokument (109) mit Hilfe des Identifikators (178) und Speichern des Dokuments (109) auf dem Signatur-Computer-System (102) in einem Speicherbereich des Nutzers (110),
- Erzeugung der elektronischen Signatur, wobei die Erzeugung der Signatur mit folgenden Schritten erfolgt:
- Aufbau einer gesicherten Internet-Session (140) zwischen dem Telekommunikationsendgerät des Nutzers und dem Signatur-Server-Computersystem (102),
- Empfang (146) eines Codes von dem Signatur-Server-Computersystem über einen separaten und/oder separat gesicherten Seitenkanal durch das Telekommunikationsendgerät,
- Übertragung einer Kombination des Codes und einer Authentifizierungsinformation des Nutzers über die gesicherte Internet-Session an das Signatur-Server-Computersystem,
- Überprüfung der Validität der Kombination des Codes und der Authentifizierungsinformation durch das Signatur-Server-Computersystem,
- Erzeugung der elektronischen Signatur des Nutzers durch ein Hochsicherheitsmodul (114) des Signatur-Server-Computersystems für das zu signierende elektronische Dokument (109) mithilfe eines privaten Schlüssels (116) des Nutzers, wobei in dem Hochsicherheitsmodul der private Schlüssel (116) des Nutzers für die Erzeugung der elektronischen Signatur gespeichert ist.

2. Verfahren nach Anspruch 1, wobei das Dokument (109) den Identifikator (178) beinhaltet und der Identifikator (178) vom Telekommunikationsendgerät (106) mit einer Schnittstelle (182) des Telekommunikationsendgerätes (106) unmittelbar vom Dokument (109) erfasst wird und/oder
wobei der Identifikator ein optisch erfassbarer Code (178) ist, der mit einer optischen Schnittstelle (182) des Telekommunikationsendgerätes (106) erfasst wird, und/oder
wobei der Identifikator eine Adresse beinhaltet, an der das Dokument (109) hinterlegt ist, und/oder
wobei die Kennung des Nutzers 110) eine Absenderadresse des Telekommunikationsendgerätes (106) des Nutzers ist, und/oder
wobei es sich bei dem Code um einen Zufallswert oder einen Pseudo-Zufallswert handelt, der von dem Signatur-Server-Computersystem aufgrund des Empfangs einer Signaturanforderung für die Erzeugung der elektronischen Signatur über die gesicherte Internet-Session erzeugt wird, und/oder
wobei es sich bei der gesicherten Internet-Session um eine https-Session handelt, und/oder
wobei der Code über den Seitenkanal des Mobilfunknetzes als SMS-Nachricht (146) oder als generierte automatische Sprachnachricht von dem Telekommunikationsendgerät empfangen wird.

3. Verfahren nach einem der vorhergehenden Ansprüche, wobei sich der Nutzer über die gesicherte Internet-Session in das Signatur-Server-Computersystem einloggt, sodass die Identität des Nutzers von dem Signatur-Server-Computersystem erkannt wird, wobei das zu signierende elektronische Dokument in einem für den eingeloggten Nutzer zugänglichen Speicherbereich (108) des Signatur-Server-Computersystems gespeichert ist, wobei der Nutzer das Dokument über die gesicherte Internet-Session auswählt, sodass das Dokument über die gesicherte Internet-Session an das Telekommunikationsendgerät übertragen und dort angezeigt wird, woraufhin der Nutzer über die gesicherte Internet-Session die Signaturanforderung zur Erzeugung der elektronischen Signatur für das ausgewählte elektronische Dokument an das Signatur-Server-Computersystem stellt.

4. Verfahren nach einem der vorhergehenden Ansprüche, wobei das elektronische Dokument zumindest ein Eingabefeld (170, 172) beinhaltet, in die Attributswerte eingetragen werden können.

5. Verfahren nach Anspruch 4, wobei das Eingabefeld und das Attribut, dessen Attributwert in das Eingabefeld einzutragen ist, semantisch einander zugeordnet sind.

6. Verfahren nach einem der vorhergehenden Ansprüche mit folgenden weiteren Schritten zur initialen Registrierung des Nutzers durch das Signatur-Server-Computersystem :
- Authentifizierung des Nutzers (110) gegenüber einem dem Nutzer (110) zugeordneten ID-Token (156), wobei der ID-Token (156) einen geschützten Speicherbereich (164) aufweist, in dem Attributwerte von Attributen des Nutzers (110) gespeichert sind,
- Authentifizierung des Signatur-Server-Computersystems (102) über das Internet (104) gegenüber dem ID-Token (156),
- Aufbau einer Verbindung mit Ende-zu-Ende-Verschlüsselung zwischen dem Signatur-Server-Computersystem)102) und dem ID-Token (156) über das Internet (104) und das Telekommunikationsendgerät (106),
- Übertragung der Attributwerte des Nutzers von dem ID-Token (156) über die Verbindung mit Ende-zu-Ende-Verschlüsselung an das Signatur-Server-Computersystem (102),
- Speicherung eines Nutzerprofils des Nutzers (110), welches das die von dem ID-Token (156) empfangenen Attributwerte des Nutzers (110) beinhaltet zur Durchführung der Registrierung des Nutzers (110) durch das Signatur-Server-Computersystem (102).

7. Verfahren nach Anspruch 6, wobei die Authentifizierung des Nutzers gegenüber dem ID-Token die folgenden Schritte umfasst:
- Erfassen eines biometrischen Merkmals des Nutzers durch eine Schnittstelle,
- Vergleich des erfassten biometrischen Merkmals mit einem auf dem ID-Token gespeicherten biometrischen Merkmal durch den ID-Token, und
- Authentifizieren des Nutzers, wenn das erfasste biometrische Merkmal mit dem gespeicherten biometrischen Merkmal übereinstimmt.

8. Verfahren nach einem der vorhergehenden Ansprüche mit folgenden weiteren Schritten zur initialen Registrierung des Nutzers (110) durch das Signatur-Server-Computersystem (102) mit folgenden Schritten:
- Auslesen mindestens eines in einem ID-Token (156) gespeicherten persönlichen biometrischen Merkmals des Nutzers (110) aus dem ID-Token (156) durch das Telekommunikationsendgerät (106),
- Übertragung des gespeicherten biometrischen Merkmals vom Telekommunikationsendgerät (106) mit Ende-zu-Ende-Verschlüsselung an das Signatur-Computer-System (102),
- Erfassen zumindest eines zum gespeicherten biometrischen Merkmal korrespondierenden biometrischen Merkmals des Nutzers (110) durch eine Schnittstelle (182) des Telekommunikationsendgerätes (106),
- Übertragung des erfassten biometrischen Merkmals vom Telekommunikationsendgerät (106) mit Ende-zu-Ende-Verschlüsselung an das Signatur-Computer-System (102),
- Vergleich des gespeicherten biometrischen Merkmals und des erfassten biometrischen Merkmals auf dem Signatur-Computer-System (102) und Identifizieren des Nutzers (110), wenn das gespeicherte biometrische Merkmal und das erfasste biometrische Merkmal übereinstimmen,
- Erfassung von Attributwerten des Nutzers (110),
- Speicherung eines Nutzerprofils (154) des Nutzers (110), welches die Attributwerte des Nutzers (110) beinhaltet.

9. Verfahren nach Anspruch 8, wobei das biometrische Merkmal mittels einer Schnittstelle des Telekommunikationsendgerätes ausgelesen wird, insbesondere mittels eines optischen Aufnahmegeräts (182) und das korrespondierende biometrische Merkmal des Nutzers mit derselben Schnittstelle erfasst wird.

10. Verfahren nach einem der Ansprüche 4 bis 9, wobei das Signatur-Server-Computersystem auf das Nutzerprofil zugreift, um einen der Attributwerte in das zumindest eine Eingabefeld einzutragen, und/oder mit folgenden Schritten:
- Senden einer ersten Attributspezifikation (220) von dem Signatur-Computer-System (102) an ein ID-Provider-Computersystem (202) über das Kommunikationsnetzwerk, wobei die erste Attributspezifikation (220) diejenigen Attribute spezifiziert, die das Signatur-Computer-System zum Ausfüllen der Eingabefelder (170, 172) des Dokumentes benötigt,
- Authentifizierung des Nutzers (110) gegenüber dem ID-Token (156),
- Authentifizierung des ID-Provider-Computersystems (202) gegenüber dem ID-Token (156),
- Authentifizierung des ID-Tokens (156) gegenüber dem ID-Provider-Computersystem (202),
- Aufbau eines ersten gesicherten Übertragungskanals (SM[CA]#1) mit Ende-zu-Ende-Verschlüsselung zwischen dem ID-Token (156) und dem ID-Provider-Computersystem (202) über das Netzwerk,
- Durchführung eines ersten Lesezugriffs (107) des ID-Provider-Computersystems (202) auf den ID-Token (156) zum Lesen der Attribute gemäß der ersten Attributspezifikation (220) aus dem ID-Token,
- Übertragung einer in dem Speicherbereich des ID-Tokens (156) gespeicherten ersten Teilmenge der in der ersten Attributspezifikation (220) spezifizierten Attribute von dem ID-Token (156) an das ID-Provider-Computersystem (202) über den ersten gesicherten Übertragungskanal,
- Erzeugung einer zweiten Attributspezifikation (226) einer zweiten Teilmenge der Attribute der ersten Attributspezifikation (220), die diejenige Attribute spezifiziert, welche in der ersten Teilmenge nicht beinhaltet sind und Übertragung der zweiten Attributspezifikation von dem ID-Provider-Computersystem (202) an den ID-Token (156) über den ersten gesicherten Übertragungskanal,
- Speicherung der zweiten Attributspezifikation (226) in dem ID-Token,
- Authentifizierung eines Attribut-Provider-Computersystems (214, 216, 218) gegenüber dem ID-Token (156),
- Authentifizierung des ID-Tokens (156) gegenüber dem Attribute-Provider-Computersystem (214, 216, 218),
- Aufbau eines zweiten gesicherten Übertragungskanals (SM[CA]#2) mit Ende-zu-Ende-Verschlüsselung zwischen dem Attribut-Provider-Computersystem (214, 216, 218) und dem ID-Token (156), wobei der erste gesicherte Übertragungskanal bestehen bleibt,
- Übertragung der zweiten Attributspezifikation (226) von dem ID-Token (156) über den zweiten gesicherten Übertragungskanal an das Attribut-Provider-Computersystem (214, 216, 218),
- Durchführung eines Schreibzugriffs des Attribut-Provider-Computersystems (214, 216, 218) über den zweiten gesicherten Übertragungskanal zum Speichern von Attributen gemäß der zweiten Attributspezifikation in dem ID-Token (156),
- Durchführung eines zweiten Lesezugriffs des ID-Provider-Computersystems (202) über den ersten gesicherten Übertragungskanal zum Lesen der von dem Attribut-Provider-Computersystem (214, 216, 218) gemäß der zweiten Attributspezifikation in dem ID-Token (156) gespeicherten Attribute,
- Ausgabe der aufgrund der Lesezugriffe von dem ID-Provider-Computersystem (202) aus dem ID-Token (156) ausgelesenen Attribute an das Signatur-Computer-System (102)
- Eingabe der Attribute in die Eingabefelder (172, 174) des Dokuments.

11. Telekommunikationsendgerät zur Anforderung der Erzeugung einer elektronischen Signatur eines Nutzers (110) für ein elektronisches Dokument (109) von einem Signatur-Server-Computer (102), wobei das Telekommunikationsendgerät dem Nutzer zugeordnet ist, mit
- Mitteln (124, 126, 138) zum Aufbau einer gesicherten Internet-Session (140) zwischen dem Telekommunikationsendgerät und dem Signatur-Server-Computersystem,
- Mitteln (124, 126, 138) zum Empfang des zu signierenden elektronischen Dokuments über die gesicherte Internet-Session von dem Signatur-Server-Computersystem und/oder Mittel (130) zur Anzeige des elektronischen Dokuments auf einer Anzeigevorrichtung des Telekommunikationsendgeräts,
- Mitteln (124, 126, 138) zur Übertragung einer Anforderung des Nutzers über die gesicherte Internet-Session zur Erzeugung der elektronischen Signatur durch das Signatur-Server-Computersystem für das auf der Anzeigevorrichtung angezeigte elektronische Dokument mithilfe eines Hochsicherheitsmodul (114) des Signatur-Server-Computersystems und eines in dem Hochsicherheitsmodul gespeicherten privaten Schlüssels (116) des Nutzers,
- Mitteln (124, 134, 138) zum Empfang eines Codes von dem Signatur-Server-Computersystem über einen separaten und/oder separat gesicherten Seitenkanal des Kommunikationsnetzes,
- Mitteln (124, 126, 138) zur Übertragung einer Kombination des Codes und einer Authentifizierungsinformation des Nutzers über die gesicherte Internet-Session an das Signatur-Server-Computersystem.

12. Telekommunikationsendgerät nach Anspruch 11, mit
- einer Kommunikationsschnittstelle (162) zum Aufbau einer lokalen Verbindung (160) zu einem ID-Token (156) des Nutzers (110),
- Mitteln zur Authentifizierung des Nutzers (110) gegenüber dem ID-Token (156),
- Mitteln (124, 126, 138) zum Ermöglichen des Auslesens von in dem ID-Token (156) gespeicherten Attributen des Nutzers (110) über die lokale Verbindung durch das Signatur-Server-Computersystem (102) mit Ende-zu-Ende-Verschlüsselung zwischen dem ID-Token (156) und dem Signatur-Server-Computersystem (102).

13. Signatur-Server-Computersystem (102) zur Erzeugung einer elektronischen Signatur eines Nutzers (110) für ein elektronisches Dokument (109) mit:
- Mitteln (122) zum Aufbau einer gesicherten Internet-Session zwischen einem Telekommunikationsendgerät (106) des Nutzers (110) und dem Signatur-Server-Computersystem (102),
- Mitteln (118, 144) zum Generieren und Senden eines Codes von dem Signatur-Server-Computersystem über einen Seitenkanal des Mobilfunknetzes an das Telekommunikationsendgerät,
- Mitteln (122) zum Empfang einer Kombination des Codes und einer Authentifizierungsinformation des Nutzers (110) über die gesicherte Internet-Session,
- Mitteln (122) zur Überprüfung der Validität der Kombination des Codes und der Authentifizierungsinformation durch das Signatur-Server-Computersystem (102),
- einem Hochsicherheitsmodul (114) zur Erzeugung der elektronischen Signatur des Nutzers (110) für das zu signierende elektronische Dokument (109) mithilfe eines privaten Schlüssels (116) des Nutzers, wobei in dem Hochsicherheitsmodul der private Schlüssel (116) des Nutzers für die Erzeugung der elektronischen Signatur gespeichert ist.

14. Signatur-Server-Computersystem nach Anspruch 13, mit Mitteln (144) zur Erzeugung eines Zufallswerts oder eines Pseudo-Zufallswerts zur Generierung des Codes und mit Mitteln zur Generierung einer SMS-Nachricht (118), um den Code über den Seitenkanal des Kommunikationsnetzes (148) an das Telekommunikationsendgerät (106) des Nutzers (110) zu senden.

15. Telekommunikationssystem (100) mit einem Telekommunikationsendgerät (106) nach Anspruch 11 oder 12 und einem Signatur-Server-Computersystem (102) nach Anspruch 13 oder 14, wobei es sich bei dem ID-Token (156) vorzugsweise um ein elektronisches Ausweisdokument handelt.

## Claims

1. A method for generating an electronic signature of a user (110) for an electronic document (109) which is stored in an electronic memory (174), wherein a telecommunication terminal (106) of a telecommunication network (148) is assigned to the user (110), said method comprising the following steps:
- capturing an identifier (178) of the document (109) by the telecommunication terminal (106);
- sending a message (184) from the telecommunication terminal (106) to a signature computer system (102), the message containing the identifier and a characteristic of the user (110);
- accessing the document (109), by the signature computer system (102), with the aid of the identifier (178) and storing the document (109) on the signature computer system (102) in a memory area of the user (110);
- generating the electronic signature, the signature being generated by the following steps:
- establishing a secure Internet session (140) between the telecommunication terminal of the user and the signature server computer system (102);
- receiving (146) a code from the signature server computer system by the telecommunication terminal via a separate and/or separately secured side channel;
- transmitting a combination of the code and authentication information of the user via the secure Internet session to the signature server computer system;
- verifying the validity of the combination of the code and the authentication information by the signature server computer system;
- generating, with the aid of a private key (116) of the user, the electronic signature of the user by a high-security module (114) of the signature server computer system for the electronic document (109) to be signed, the private key (116) of the user for generation of the electronic signature being stored in the high-security module.

2. The method according to claim 1, wherein the document (109) contains the identifier (178) and the identifier (178) is captured directly from the document (109) by the telecommunication terminal (106) using an interface (182) of the telecommunication terminal (106), and/or
wherein the identifier is an optically capturable code (178), which is captured using an optical interface (182) of the telecommunication terminal (106), and/or
wherein the identifier includes an address where the document (109) is stored, and/or
wherein the characteristic of the user (110) is a sender address of the telecommunication terminal (106) of the user, and/or
wherein the code is a random value or a pseudorandom value, which is generated by the signature server computer system on account of the receipt of a signature request for the generation of the electronic signature via the secure Internet session, and/or
wherein the secure Internet session is an https session, and/or
wherein the code is received by the telecommunication terminal via the side channel of the mobile communication network as an SMS message (146) or as a generated automatic voice message.

3. The method according to either one of the preceding claims, wherein the user logs into the signature server computer system via the secure Internet session, so that the identity of the user is recognised by the signature server computer system, wherein the electronic document to be signed is stored in a memory area (108) of the signature server computer system accessible to the logged-in user, wherein the user chooses the document via the secure Internet session, so that the document is transmitted via the secure Internet session to the telecommunication terminal and is visualised there, whereupon the user submits the signature request for generation of the electronic signature for the selected electronic document to the signature server computer system via the secure Internet session.

4. The method according to any one of the preceding claims, wherein the electronic document includes at least one input field (170, 172), into which attribute values may be entered.

5. The method according to claim 4, wherein the input field and the attribute of which the attribute value is to be entered into the input field are semantically associated with one another.

6. The method according to any one of the preceding claims, with the following further steps for initial registration of the user by the signature server computer system:
- authenticating the user (110) to an ID token (156) assigned to the user (110), wherein the ID token (156) has a protected memory area (164), in which attribute values of attributes of the user (110) are stored,
- authenticating the signature server computer system (102) to the ID token (156) via the Internet (104),
- establishing a connection with end-to-end encryption between the signature server computer system (102) and the ID token (156) via the Internet (104) and the telecommunication terminal (106),
- transmitting the attribute values of the user from the ID token (156) to the signature server computer system (102) via the connection with end-to-end encryption,
- storing a user profile of the user (110), which user profile contains the attribute values of the user (110) received from the ID token (156), in order to carry out the registration of the user (110) by the signature server computer system (102).

7. The method according to claim 6, wherein the authentication of the user to the ID token comprises the following steps:
- capturing a biometric feature of the user by an interface,
- comparing the captured biometric feature with a biometric feature stored on the ID token by the ID token, and
- authenticating the user if the captured biometric feature matches the stored biometric feature.

8. The method according to any one of the preceding claims, comprising the following further steps for the initial registration of the user (110) by the signature server computer system (102) with the following steps:
- reading at least one personal biometric feature of the user (110) stored in an ID token (156) from the ID token (156) by the telecommunication terminal (106),
- transmitting the stored biometric feature from the telecommunication terminal (106) to the signature computer system (102) with end-to-end encryption,
- capturing at least one biometric feature of the user (110) corresponding to the stored biometric feature by an interface (182) of the telecommunication terminal (106),
- transmitting the captured biometric feature from the telecommunication terminal (106) to the signature computer system (102) with end-to-end encryption,
- comparing the stored biometric feature and the captured biometric feature on the signature computer system (102) and identifying the user (110) if the stored biometric feature and the captured biometric feature match,
- capturing attribute values of the user (110),
- storing a user profile (154) of the user (110), which user profile contains the attribute values of the user (110).

9. The method according to claim 8, wherein the biometric feature is read by means of an interface of the telecommunication terminal, in particular by means of an optical recording device (182), and the corresponding biometric feature of the user is captured using the same interface.

10. The method according to any one of claims 4 to 9, wherein the signature server computer system accesses the user profile in order to enter one of the attribute values into the at least one input field, and/or comprising the following steps:
- sending a first attribute specification (220) from the signature computer system (102) to an ID provider computer system (202) via the communication network, wherein the first attribute specification (220) specifies those attributes required by the signature computer system in order to fill out the input fields (170, 172) of the document,
- authenticating the user (110) to the ID token (156),
- authenticating the ID provider computer system (202) to the ID token (156),
- authenticating the ID token (156) to the ID provider computer system (202),
- establishing a first secure transmission channel (SM[CA]#1) with end-to-end encryption between the ID token (156) and the ID provider computer system (202) via the network,
- performing a first read access (107) by the ID provider computer system (202) to the ID token (156) in order to read the attributes according to the first attribute specification (220) from the ID token,
- transmitting a first subset, stored in the memory area of the ID token (156), of the attributes specified in the first attribute specification (220) from the ID token (156) to the ID provider computer system (202) via the first secure transmission channel,
- generating a second attribute specification (226) of a second subset of the attributes of the first attribute specification (220), which specifies those attributes which are not contained in the first subset, and transmitting the second attribute specification from the ID provider computer system (202) to the ID token (156) via the first secure transmission channel,
- storing the second attribute specification (226) in the ID token,
- authenticating an attribute provider computer system (214, 216, 218) to the ID token (156),
- authenticating the ID token (156) to the attribute provider computer system (214, 216, 218),
- establishing a second secure transmission channel (SM[CA]#2) with end-to-end encryption between the attribute provider computer system (214, 216, 218) and the ID token (156), wherein the first secure transmission channel is maintained,
- transmitting the second attribute specification (226) from the ID token (156) to the attribute provider computer system (214, 216, 218) via the second secure transmission channel,
- performing a write access of the attribute provider computer system (214, 216, 218) via the second secure transmission channel in order to store attributes according to the second attribute specification in the ID token (156),
- performing a second read access of the ID provider computer system (202) via the first secure transmission channel in order to read the attributes stored by the attribute provider computer system (214, 216, 218) in accordance with the second attribute specification in the ID token (156),
- outputting, to the signature computer system (102), the attributes read from the ID token (156) on the basis of the read access by the ID provider computer system (202), and
- inputting the attributes into the input fields (172, 174) of the document.

11. A telecommunication terminal for requesting the generation of an electronic signature of a user (110) for an electronic document (109) from a signature server computer (102), wherein the telecommunication terminal is assigned to the user, said telecommunication terminal comprising
- means (124, 126, 138) for establishing a secure Internet session (140) between the telecommunication terminal and the signature server computer system,
- means (124, 126, 138) for receiving the electronic document to be signed via the secure Internet session from the signature server computer system, and/or means (130) for visualising the electronic document on a visualisation device of the telecommunication terminal,
- means (124, 126, 138) for transmitting, via the secure Internet session, a request of the user for the generation, for the electronic document visualised on the visualisation device, of the electronic signature by the signature server computer system with the aid of a high-security module (114) of the signature server computer system and a private key (116) of the user stored in the high-security module,
- means (124, 134, 138) for receiving a code from the signature server computer system via a separate and/or separately secured side channel of the communication network,
- means (124, 126, 138) for transmitting to the signature server computer system, via the secure Internet session, a combination of the code and authentication information of the user.

12. The telecommunication terminal according to claim 11, comprising
- a communication interface (162) for establishing a local connection (160) to an ID token (156) of the user (110),
- means for authenticating the user (110) to the ID token (156),
- means (124, 126, 138) for enabling the attributes of the user (110) stored in the ID token (156) to be read via the local connection by the signature server computer system (102) with end-to-end encryption between the ID token (156) and the signature server computer system (102).

13. A signature server computer system (102) for generating an electronic signature of a user (110) for an electronic document (109), said system comprising:
- means (122) for establishing a secure Internet session between a telecommunication terminal (106) of the user (110) and the signature server computer system (102),
- means (118, 144) for generating and sending a code from the signature server computer system to the telecommunication terminal via a side channel of the mobile communication network,
- means (122) for receiving, via the secure Internet session, a combination of the code and authentication information of the user (110),
- means (122) for verifying, by the signature server computer system (102), the validity of the combination of the code and of the authentication information,
- a high-security module (114) for generating, for the electronic document (109) to be signed, the electronic signature of the user (110) with the aid of a private key (116) of the user, wherein the private key (116) of the user for the generation of the electronic signature is stored in the high-security module.

14. The signature server computer system according to claim 13, comprising means (144) for generating a random value or a pseudorandom value for generation of the code, and comprising means for generating an SMS message (118) in order to send the code via the side channel of the communication network (148) to the telecommunication terminal (106) of the user (110).

15. A telecommunication system (100) comprising a telecommunication terminal (106) according to claim 11 or 12 and a signature server computer system (102) according to claim 13 or 14, wherein the ID token (156) is preferably an electronic identification document.

## Revendications

1. Procédé de production d'une signature électronique d'un utilisateur (110) pour un document électronique (109) qui est enregistré dans une mémoire électronique (174), où un appareil terminal de télécommunications (106) d'un réseau de télécommunications (148) est associé à l'utilisateur (110), avec les étapes suivantes :
- la détection d'un identificateur (178) du document (109) par l'appareil terminal de télécommunications (106),
- l'envoi d'un message (184) de l'appareil terminal de télécommunications (106) à un système informatique de signatures (102), où le message contient l'identificateur et un identifiant de l'utilisateur (110),
- l'accès du système informatique de signatures (102) au document (109) à l'aide de l'identificateur (178) et le stockage du document (109) sur le système informatique de signatures (102) dans une zone de mémoire de l'utilisateur (110),
- la production d'une signature électronique, où la production de la signature a lieu avec les étapes suivantes :
- l'établissement d'une session internet sécurisée (140) entre l'appareil terminal de télécommunications de l'utilisateur et le système informatique serveur de signatures (102),
- la réception (146) d'un code à partir du système informatique serveur de signatures par l'appareil terminal de télécommunications par le biais d'un canal latéral séparé et/ou sécurisé séparément,
- la transmission au système informatique serveur de signatures d'une combinaison du code et d'une information d'authentification de l'utilisateur par le biais de la session internet sécurisée,
- la vérification de la validité de la combinaison du code et de l'information d'authentification par le système informatique serveur de signatures,
- la production de la signature électronique de l'utilisateur par un module de haute sécurité (114) du système informatique serveur de signatures pour le document électronique (109) devant être signé à l'aide d'une clé privée (116) de l'utilisateur, où la clé privée (116) de l'utilisateur est stockée dans le module de haute sécurité pour la production de la signature électronique.

2. Procédé selon la revendication 1, dans lequel le document (109) contient l'identificateur (178) et l'identificateur (178) est détecté par l'appareil terminal de télécommunications (106) avec une interface (182) de l'appareil terminal de télécommunications (106) immédiatement par le document (109), et/ou dans lequel l'identificateur est un code (178) détectable de manière optique qui est détecté avec une interface optique (182) de l'appareil terminal de télécommunications (106), et/ou
dans lequel l'identificateur contient une adresse à laquelle le document (109) est enregistré, et/ou
- dans lequel l'identifiant de l'utilisateur (110) est une adresse d'expédition de l'appareil terminal de télécommunications (106) de l'utilisateur, et/ou
dans lequel, dans le cas du code, il s'agit d'une valeur aléatoire ou d'une valeur pseudo-aléatoire qui est générée par le système informatique serveur de signatures en raison de la réception d'une demande de signature pour la production d'une signature électronique par le biais de la session internet sécurisée, et/ou dans lequel, dans le cas de la session internet sécurisée, il s'agit d'une session http,
et/ou
dans lequel le code est reçu sous forme d'un message SMS (146) ou sous forme d'un message vocal automatique généré à partir de l'appareil terminal de télécommunications par le biais du canal latéral du réseau radio mobile.

3. Procédé selon l'une des revendications précédentes, dans lequel l'utilisateur se connecte au système informatique serveur de signatures par le biais de la session internet sécurisée, de sorte que l'identité de l'utilisateur est reconnue par le système informatique serveur de signatures, où le document électronique devant être signé est stocké dans la zone de stockage (108) du système informatique serveur de signatures accessible pour l'utilisateur connecté, où l'utilisateur choisit le document par le biais de la session internet sécurisée, de sorte que le document est transmis à l'appareil terminal de télécommunications par le biais de la session internet sécurisée et y est affiché, à la suite de quoi l'utilisateur effectue la demande de signature par le biais de la session internet sécurisée pour la production de la signature électronique pour le document électronique choisi au système informatique serveur de signatures.

4. Procédé selon l'une des revendications précédentes, dans lequel le document électronique contient au moins un champ de saisie (170, 172), dans lequel les valeurs d'attributs peuvent être reportées.

5. Procédé selon la revendication 4, dans lequel le champ de saisie et l'attribut dont la valeur d'attribut est à reporter dans le champ de saisie sont disposés de manière sémantique l'un par rapport à l'autre

6. Procédé selon l'une des revendications précédentes avec de nouvelles étapes suivantes pour l'enregistrement initial de l'utilisateur par le système informatique serveur de signatures :
- l'authentification de l'utilisateur (110) vis-à-vis d'un jeton d'ID (156) associé à l'utilisateur (110), où le jeton d'ID (156) présente une zone de mémoire sécurisée (164) dans laquelle des valeurs d'attributs d'attributs de l'utilisateur sont stockées,
- l'authentification du système informatique serveur de signatures (102) vis-à-vis du jeton d'ID (156) par le biais d'internet (104),
- l'établissement d'une connexion avec un cryptage de bout en bout entre le système informatique serveur de signatures (102) et le jeton d'ID (156) par le biais d'internet (104) et l'appareil terminal de télécommunications (106),
- la transmission des valeurs d'attributs de l'utilisateur du jeton d'ID (156) au système informatique serveur de signatures (102) par le biais de la connexion avec le cryptage de bout en bout,
- le stockage d'un profil d'utilisateur de l'utilisateur (110), lequel contient des valeurs d'attributs de l'utilisateur (110) reçues à partir du jeton d'ID (156) pour l'exécution de l'enregistrement de l'utilisateur (110) par le système informatique serveur de signatures (102).

7. Procédé selon la revendication 6, dans lequel l'authentification de l'utilisateur vis-à-vis du jeton d'ID comprend les étapes suivantes :
- la détection d'une caractéristique biométrique de l'utilisateur par une interface,
- la comparaison de la caractéristique biométrique détectée avec une caractéristique biométrique stockée sur le jeton d'ID par le jeton d'ID, et
- l'authentification de l'utilisateur lorsque la caractéristique biométrique détectée correspond avec la caractéristique biométrique stockée.

8. Procédé selon l'une des revendications précédentes avec de nouvelles étapes suivantes pour l'enregistrement initial de l'utilisateur (110) par le système informatique serveur de signatures (102), avec les étapes suivantes :
- la lecture à partir du jeton d'ID (156) d'au moins une caractéristique biométrique personnelle de l'utilisateur (110) stockée dans un jeton d'ID (156) par l'appareil terminal de télécommunications (106),
- la transmission de la caractéristique biométrique stockée de l'appareil terminal de télécommunications (106) au système informatique de signatures (102) avec un cryptage de bout en bout,
- la détection d'au moins une caractéristique biométrique de l'utilisateur (110) correspondant à la caractéristique biométrique stockée par une interface (182) de l'appareil terminal de télécommunications (106),
- la transmission de la caractéristique biométrique détectée de l'appareil terminal de télécommunications (106) au système informatique de signatures (102) avec un cryptage de bout en bout,
- la comparaison de la caractéristique biométrique stockée et de la caractéristique biométrique détectée sur le système informatique de signatures (102) et l'identification de l'utilisateur (110) lorsque la caractéristique biométrique stockée et la caractéristique biométrique détectée correspondent,
- la détection de valeurs d'attributs de l'utilisateur (110),
- le stockage d'un profil d'utilisateur (154) de l'utilisateur (110), lequel contient les valeurs d'attributs de l'utilisateur (110).

9. Procédé selon la revendication 8, dans lequel la caractéristique biométrique est lue au moyen d'une interface de l'appareil terminal de télécommunications (106), notamment au moyen d'un appareil d'enregistrement optique (182), et la caractéristique biométrique de l'utilisateur correspondante est détectée avec la même interface.

10. Procédé selon l'une des revendications 4 à 9, dans lequel le système informatique serveur de signatures a accès au profil d'utilisateur afin d'y reporter une des valeurs d'attributs dans l'au moins un champ de saisie, et/ou avec les étapes suivantes :
- l'envoi d'une première spécification d'attributs (220) du système informatique de signatures (102) à un système informatique fournisseur d'ID (202) par le biais du réseau de communication, où la première spécification d'attributs (220) spécifie les attributs en question dont a besoin le système informatique de signatures pour le remplissage des champs de saisie (170, 172) du document,
- l'authentification de l'utilisateur (110) vis-à-vis du jeton d'ID (156),
- l'authentification du système informatique fournisseur d'ID (202) vis-à-vis du jeton d'ID (156),
- l'authentification du jeton d'ID (156) vis-à-vis du système informatique fournisseur d'ID (202),
- l'établissement d'un premier canal de transmission sécurisé (SM[CA]#1) avec un cryptage de bout en bout entre le jeton d'ID (156) et le système informatique fournisseur d'ID (202) par le biais du réseau,
- l'exécution d'un premier accès en lecture (107) du système informatique fournisseur d'ID (202) dans le jeton d'ID (156) pour la lecture des attributs selon la première spécification d'attributs (220) à partir du jeton d'ID,
- la transmission d'une première quantité partielle des attributs spécifiés dans la première spécification d'attributs (220) stockée dans la zone de mémoire du jeton d'ID (156) du jeton d'ID (156) au système informatique fournisseur d'ID (202) par le biais du premier canal de transmission sécurisé,
- la création d'une deuxième spécification d'attributs (226) d'une deuxième quantité partielle des attributs de la première spécification d'attributs (220) qui spécifie les attributs en question, lesquels ne sont pas contenus dans la première quantité partielle et la transmission de la deuxième spécification d'attributs du système informatique fournisseur d'ID (202) au jeton d'ID (156) par le biais du premier canal de transmission sécurisé,
- le stockage de la deuxième spécification d'attributs (226) dans le jeton d'ID,
- l'authentification d'un système informatique fournisseur d'attributs (214, 216, 218) vis-à-vis du jeton d'ID (156),
- l'authentification du jeton d'ID (156) vis-à-vis du système informatique fournisseur d'attributs (214, 216, 218),
- l'établissement d'un deuxième canal de transmission sécurisé (SM[CA]#2) avec un cryptage de bout en bout entre le système informatique fournisseur d'attributs (214, 216, 218) et le jeton d'ID (156), où le premier canal de transmission sécurisé reste maintenu,
- la transmission de la deuxième spécification d'attributs (226) du jeton d'ID (156) du jeton d'ID (156) au système informatique fournisseur d'attributs (214, 216, 218) par le biais du deuxième canal de transmission sécurisé,
- l'exécution d'un accès en écriture du système informatique fournisseur d'attributs (214, 216, 218) par le biais du deuxième canal de transmission sécurisé pour le stockage d'attributs selon la deuxième spécification d'attributs dans le jeton d'ID (156),
- l'exécution d'un deuxième accès en lecture du système informatique fournisseur d'ID (202) par le biais du premier canal de transmission sécurisé pour la lecture des attributs stockés dans le jeton d'ID (156) selon la deuxième spécification d'attributs par le système informatique fournisseur d'attributs (214, 216, 218),
- la délivrance des attributs lus à partir du jeton d'ID (156) en raison des accès en lecture du système informatique fournisseur d'ID (202) au système informatique de signatures (102)
- l'entrée des attributs dans les champs de saisie (172, 174) du document.

11. Appareil terminal de télécommunications permettant la demande de production d'une signature électronique d'un utilisateur (110) pour un document électronique (109) par un ordinateur serveur de signatures (102), où l'appareil terminal de télécommunications est associé à l'utilisateur, avec
- des moyens (124, 126, 138) pour l'établissement d'une session internet sécurisée (140) entre l'appareil terminal de télécommunications et le système informatique serveur de signatures,
- des moyens (124, 126, 138) pour la réception du document électronique devant être signé par le système informatique serveur de signatures par le biais de la session internet sécurisée, et/ou des moyens (130) permettant l'affichage du document électronique sur un dispositif d'affichage de l'appareil terminal de télécommunications,
- des moyens (124, 126, 138) pour la transmission d'une demande de l'utilisateur par le biais de la session internet sécurisée pour la production de la signature électronique par le système informatique serveur de signatures pour le document électronique affiché sur le dispositif d'affichage à l'aide d'un module de haute sécurité (114) du système informatique serveur de signatures et d'une clé privée (116) de l'utilisateur stockée dans le module de haute sécurité,
- des moyens (124, 134, 138) pour la réception d'un code à partir du système informatique serveur de signatures par le biais d'un canal latéral séparé et/ou sécurisé séparément du réseau de communication,
- des moyens (124, 126, 138) pour la transmission au système informatique serveur de signatures d'une combinaison du code et d'une information d'authentification de l'utilisateur par le biais de la session internet sécurisée.

12. Appareil terminal de télécommunications selon la revendication 11 avec
- une interface de communication (162) permettant l'établissement d'une connexion locale (160) vers un jeton d'ID (156) de l'utilisateur (110),
- des moyens permettant l'authentification de l'utilisateur (110) vis-à-vis du jeton d'ID (156),
- des moyens (124, 126, 138) permettant la lecture d'attributs de l'utilisateur stockés dans le jeton d'ID (156) par le biais de la connexion locale par le système informatique serveur de signatures (102) avec un cryptage de bout en bout entre le jeton d'ID (156) et le système informatique serveur de signatures (102).

13. Système serveur de signatures (102) permettant la production d'une signature électronique d'un utilisateur (110) pour un document électronique (109) avec :
- des moyens (122) pour l'établissement d'une session internet sécurisée entre un appareil terminal de télécommunications (106) de l'utilisateur (110) et le système informatique serveur de signatures (102),
- des moyens (118, 144) pour la génération et l'envoi d'un code du système informatique serveur de signatures à l'appareil terminal de télécommunications par le biais d'un canal latéral du réseau radio mobile,
- des moyens (122) pour la réception d'une combinaison du code et d'une information d'authentification de l'utilisateur (110) par le biais de la session internet sécurisée,
- des moyens (122) pour la vérification de la validité de la combinaison du code et de l'information d'authentification par le système informatique serveur de signatures (102),
- un module de haute sécurité (114) pour la production de la signature électronique de l'utilisateur (110) pour le document électronique (109) devant être signé à l'aide d'une clé privée (116) de l'utilisateur, où la clé privée (116) de l'utilisateur est stockée dans le module de haute sécurité pour la production de la signature électronique.

14. Système informatique serveur de signatures selon la revendication 13, avec des moyens (144) pour la production d'une valeur aléatoire ou d'une valeur pseudo-aléatoire pour la génération du code et avec des moyens pour la génération d'un message SMS (118) afin d'envoyer le code à l'appareil terminal de télécommunications (106) de l'utilisateur (110) par le biais du canal latéral du réseau de communication (148).

15. Système de télécommunications (100) avec un appareil terminal de télécommunications (106) selon la revendication 11 ou la revendication 12 et un système informatique serveur de signatures (102) selon la revendication 13 ou la revendication 14, où, dans le cas du jeton d'ID (156), il s'agit de préférence d'un document d'identité électronique.
